(19) Europäisches Patentamt / European Patent Office / Office européen des brevets

(11) **EP 3 417 564 B1**

(12) **EUROPEAN PATENT SPECIFICATION**

(45) Date of publication and mention
of the grant of the patent:
**21.12.2022  Bulletin 2022/51**

(21) Application number: **17707975.3**

(22) Date of filing: **15.02.2017**

(51) International Patent Classification (IPC):
**H04L 5/00** $^{(2006.01)}$

(52) Cooperative Patent Classification (CPC):
**H04L 5/0048**

(86) International application number:
**PCT/SE2017/050145**

(87) International publication number:
**WO 2017/142466 (24.08.2017 Gazette 2017/34)**

(54) **MU-MIMO WITH MIXED ORTHOGONAL COVER CODE LENGTH**

MU-MIMO MIT GEMISCHTER ORTHOGONALER REICHWEITENCODELÄNGE

ENTRÉES MULTIPLES, SORTIES MULTIPLES MULTI-UTILISATEUR (MU-MIMO) AYANT UNE LONGUEUR DE CODE DE RECOUVREMENT ORTHOGONAL MIXTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **15.02.2016  US 201662295265 P**

(43) Date of publication of application:
**26.12.2018  Bulletin 2018/52**

(73) Proprietor: **Telefonaktiebolaget LM Ericsson (PUBL)**
**164 83 Stockholm (SE)**

(72) Inventors:
 • **HARRISON, Robert Mark**
   **Grapevine**
   **Texas 76051 (US)**
 • **GAO, Shiwei**
   **Nepean**
   **Ontario K2J 0H5 (CA)**
 • **MURUGANATHAN, Siva**
   **Stittsville**
   **Ontario K2S 0R3 (CA)**
 • **FRENNE, Mattias**
   **SE-754 43 Uppsala (SE)**

(74) Representative: **Zacco Sweden AB**
   **P.O. Box 5581**
   **Löjtnantsgatan 21**
   **114 85 Stockholm (SE)**

(56) References cited:
   **WO-A1-2014/051374**     **WO-A1-2015/190847**
   **US-A1- 2012 281 551**     **US-A1- 2015 215 017**

 • **LG ELECTRONICS: "Discussion on non-precoded CSI-RS-based scheme enhancements", 3GPP DRAFT; R1-151533, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Belgrade, Serbia; 20150420 - 20150424 19 April 2015 (2015-04-19), XP050934405, Retrieved from the Internet: URL:http://www.3gpp.org/ftp/Meetings_3GPP_ SYNC/RAN1/Docs/ [retrieved on 2015-04-19]**
 • **CMCC: "Spec impact of additional DMRS ports", 3GPP DRAFT; R1-154304, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 23 August 2015 (2015-08-23), XP051001632, Retrieved from the Internet: URL:http://www.3gpp.org/ftp/Meetings_3GPP_ SYNC/RAN1/Docs/ [retrieved on 2015-08-23]**

**Description**

Technical Field

The present disclosure pertains to wireless communication technology, in particular performing measurements for estimating a channel.

Background

In modern wireless communication systems, multiple-antenna systems are widely used. For the increasing number of use cases and scenarios, e.g. according to 5G system like LTE Evolution and/or New Radio (NR), such systems likely will be of increased power and flexibility. To manage such systems, reference signaling and measurements thereon must be suitable and adaptable for such power and flexibility.

Summary

It is an object of the present disclosure to provide approaches allowing improved use of reference signaling and/or measurements, in particular in multiple-antenna systems.

LG Electronics:" Discussion on non-precoded CSI-RS-based scheme enhancements" 3GPP DRAFT; R1-151533 discloses regarding high level categories for potential CSI-RS and feedback enhancements, and potential CSI-RS enhancements related to the number of NZP CSI-RS ports.

US 2015/215017 A1 discloses a method and apparatus for cancelling interference are disclosed. The method for cancelling interference, performed by a User Equipment (UE) includes receiving interference transmission layer restriction information about a neighbor Base Station (BS) transmitting an interference signal or information about the number of antenna ports used in transmitting the interference signal by the neighbor BS, detecting control information about the interference signal using the interference transmission layer restriction information, and removing the interference signal using the detected control information.

US 2012281551 A1 discloses a method for setting a mobile node specific cyclic prefix in a mobile communication.

WO2015190847A1 discloses a data transmission method in that a UE receives the CSI-RS configuration signaling from a base station, measures and reports CSI according to the CSI-RS configuration signaling.

CMCC: Spec impact of additional DMRS ports", 3GPP draft; R1-154304, 3rd generation partnership project (3GPP), mobile competence centre; 650, route des lucioles; F-06921 sophia-antipolis cedex france, vol. RAN WG1, August 2015 (2015-08-23) seems to disclose new DCI design for additional DMRS ports.

The invention is defined by the independent claims. Furthermore, the embodiments of the invention are those defined by the claims.

There is also disclosed a user equipment for a wireless communication network. The user equipment is adapted for performing, based on a configuration, measurements on received signaling, wherein the configuration indicates a combination length of symbols for the measurements. Performing measurements comprises measuring on a number of symbols indicated by the combination length.

A method for operating a network node for a wireless communication network is proposed. The method comprises configuring one or more user equipments with a configuration for measurements, wherein the configuration indicates a combination length of symbols for the measurements, and wherein measurements comprise measuring on a number of symbols indicated by the combination length.

Moreover, a network node for a wireless communication network is discussed. The network node is adapted for configuring one or more user equipments with a configuration for measurements, wherein the configuration indicates a combination length of symbols for the measurements, and wherein measurements comprise measuring on a number of symbols indicated by the combination length.

A program product comprising code executable by control circuitry is described, the code causing the control circuitry to carry out and/or control any one of the methods described herein.

In addition, a carrier medium arrangement carrying and/or storing a program product as described herein is disclosed.

A configuration may be any configuration as described herein.

Brief description of the drawings

The drawings are provided to illustrate the concepts and approaches described herein and are not intended their scope. The drawings comprise:

Figure 1, showing an LTE downlink physical resource;

Figure 2, showing an LTE time-domain structure;

Figure 3, showing an exemplary downlink system;

Figure 4, showing exemplary CRS and DMRS patterns;

Figure 5, showing an example of multiplexing multiple UEs;

Figure 6, showing received signals at a UE;

Figure 7, showing an example of multi-point MU-MIMO;

Figure 8, showing another example of MU-MIMO;

Figure 9, showing an exemplary user equipment; and

Figure 10, showing an exemplary network node.

Detailed description

A variant LTE system is discussed in the following. However, the approaches presentedherein may generally be considered applicable to other systems or standards utilizing multiple antenna arrays, in particular 3GPP 5G standards like LTE Evolution or New Radio (NR).

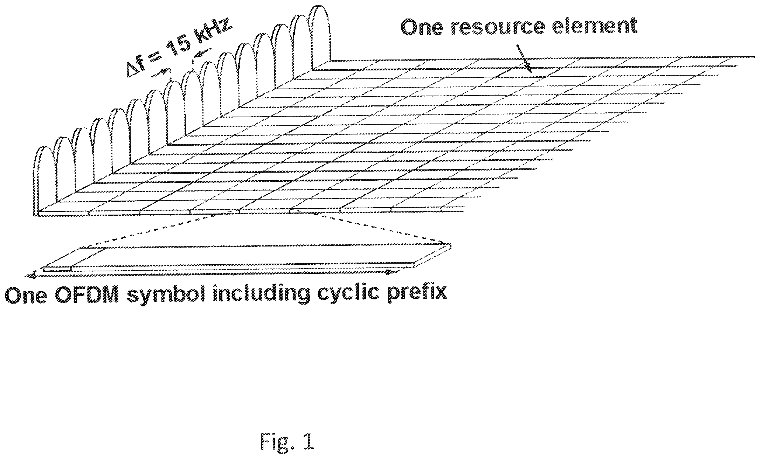

LTE uses OFDM in the downlink and DFT-spread OFDM in the uplink. The basic LTE downlink physical resource can be seen as a time-frequency grid as illustrated in Figure 1, where each resource element (RE) corresponds to one OFDM subcarrier during one OFDM symbol interval.

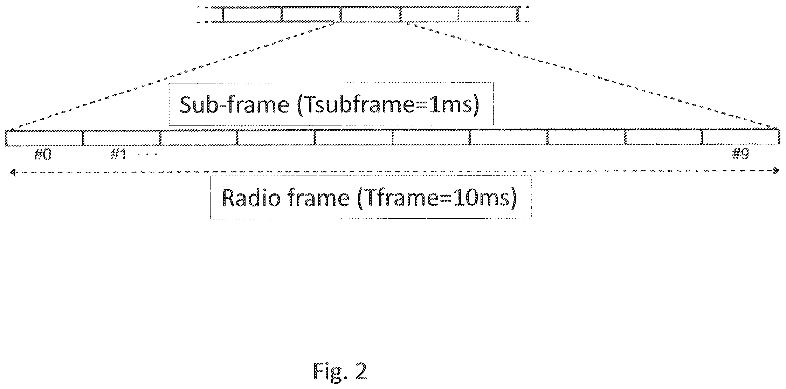

In the time domain, LTE downlink transmissions are organized into radio frames of 10 ms, each radio frame consisting of ten equally-sized subframes of length Tsubframe = 1 ms. Each subframe may have assigned to it a number of symbols, e.g. 14 symbols, wherein a symbol time (a duration of a symbol) may be defined as the time interval or duration of a symbol, e.g. to be the same for all symbols of a subframe. Figure 2 shows a LTE time-domain structure.

Furthermore, the resource allocation in LTE is typically described in terms of resource blocks, where a resource block corresponds to one slot (0.5 ms) in the time domain and 12 contiguous subcarriers in the frequency domain. A pair of two adjacent resource blocks in time direction (1.0 ms) is known as a resource block pair. Resource blocks are numbered in the frequency domain, starting with 0 from one end of the system bandwidth.

The notion of virtual resource blocks (VRB) and physical resource blocks (PRB) has been introduced in LTE. The actual resource allocation to a UE is made in terms of VRB pairs. There are two types of resource allocations, localized and distributed. In the localized resource allocation, a VRB pair is directly mapped to a PRB pair, hence two consecutive and localized VRB are also placed as consecutive PRBs in the frequency domain. On the other hand, the distributed VRBs are not mapped to consecutive PRBs in the frequency domain, thereby providing frequency diversity for data channel transmitted using these distributed VRBs.

Downlink transmissions are dynamically scheduled, i.e., in each subframe the base station transmits control information about to which terminals (or UEs, the terms may be used interchangeably in this disclosure) data is transmitted and/or upon which resource blocks the data is transmitted, in the current downlink subframe.

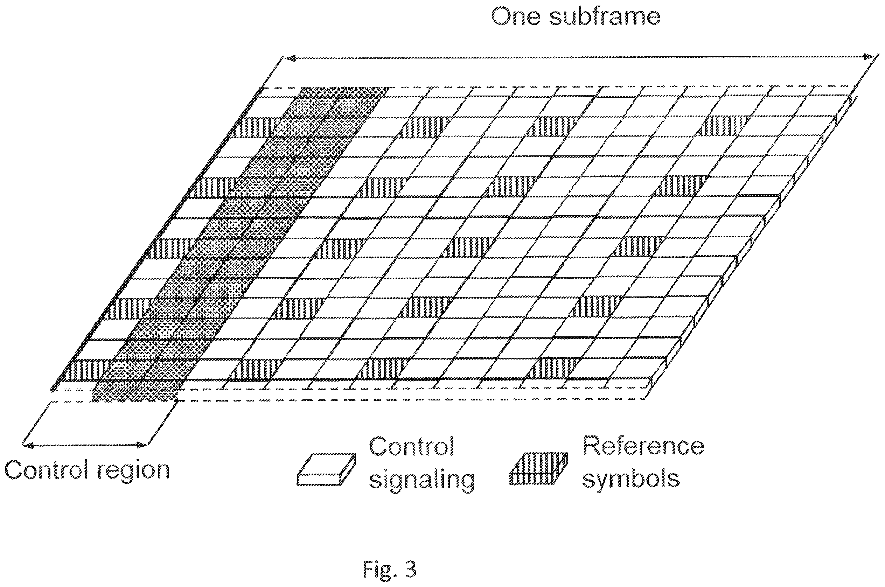

This control signaling is typically transmitted in the first 1, 2, 3 or 4 OFDM symbols in each subframe and the number n=1,2,3 or 4 is known as the Control Format Indicator (CFI). The downlink subframe also contains common reference symbols, which are known to the receiver and used for coherent demodulation of e.g. the control information. A downlink system with CFI=3 OFDM symbols as control is illustrated in Figure 3, which shows a downlink subframe.

Physical Downlink Channels and Transmission modes are discussed in the following.

In LTE, several different physical DL channels are supported. A downlink physical channel corresponds to a set of resource elements carrying information originating from higher layers (of the protocol stack). The following physical DL channels are supported in LTE:

- Physical Downlink Shared Channel, PDSCH
- Physical Broadcast Channel, PBCH
- Physical Multicast Channel, PMCH
- Physical Control Format Indicator Channel, PCFICH

- Physical Downlink Control Channel, PDCCH
- Physical Hybrid ARQ Indicator Channel, PHICH
- Enhanced Physical Downlink Control Channel, EPDCCH

The PDSCH is used mainly for carrying user traffic data and higher layer messages. PDSCH is transmitted in a DL subframe outside of the control region as shown in Figure 3. Both PDCCH and EPDCCH are used to carry Downlink Control Information (DCI) such as information identifying PRB allocation, modulation level and coding scheme (MCS), precoder used at the transmitter, etc. (generally, both channels may carry allocation data). PDCCH is transmitted in the first one to four OFDM symbols in a DL subframe, in particular the control region, while EPDCCH is transmitted in the same region as PDSCH and/or generally in outside the control region. A subframe may generally be divided into a control region, which may be indicated by information indicating CFI, and/or a region outside the control region, which may be referred to as data region or non-control region.

Different DCI formats are defined in LTE for DL and UL data scheduling. For example, DCI formats 0 and 4 are used for UL data scheduling (scheduling of transmission by a terminal or UE), while DCI formats 1, 1A, 1B, 1C, 1D,2,2A,2B,2C,2D are used for DL data scheduling. In DL, which DCI format is used for data scheduling is associated with a DL transmission scheme and/or the type of message to be transmitted. The following transmission schemes are defined in LTE.

- Single-antenna port
- Transmit diversity (TxD)
- Open-loop spatial multiplexing
- Close-loop spatial multiplexing
- Multi-user MIMO (MU-MIMO)
- Dual layer transmission
- Up to 8 layer transmission

PDCCH is always transmitted with either the single-antenna port or Transmit Diversity scheme, while PDSCH can use any one of the transmission schemes. In LTE, a UE is configured (e.g., from a network node and/or with allocation data or a corresponding configuration) with a transmission mode (TM), rather than a transmission scheme. There are 10 TMs, i.e. TM1 to TM10, defined so far for PDSCH in LTE. Each TM defines a primary transmission scheme and a backup transmission scheme. The backup transmission scheme is either single antenna port or TxD. The primary transmission scheme for the 10 TMs are:

- TM1: single antenna port, port 0
- TM2: TxD
- TM3: open-loop SM
- TM4: close-loop SM
- TM5:MU-MIMO
- TM6: Close-loop SM with a single transmission layer
- TM7: single antenna: port 5
- TM8: dual layer transmission or single antenna port: port 7 or 8
- TM9: up to 8 layer transmission, port 7-14 or single antenna port: port 7 or 8
- TM10: up to 8 layer transmission, port 7-14 or single antenna port: port 7 or 8

In TM1 to TM6, cell-specific reference signal/signaling (CRS) is used as reference signaling for channel estimation at a UE for demodulation. In TM7 to TM10, UE-specific demodulation reference signaling (DMRS) is used as the reference signaling for channel estimation and demodulation. Antenna ports 0 to 3 are CRS ports, while ports 7 to 14 are DMRS ports (respectively, are associated to CRS or DMRS). TM4 is a CRS based single user (SU) multiple input and multiple output (MIMO) scheme, in which multiple data layers for the same UE are multiplexed and transmitted on the same PRB. On the other hand, TM9 or TM10 are DMRS based SU-MIMO schemes. In TM4, precoder (and/or information indicating a precoder, e.g. a configuration and/or allocation data) may be signalled to a UE dynamically. Such information is, however, not required in TM9 and TM10.

Spatial Division Multiplexing (SDMA) or MU-MIMO is discussed in the following.

When two UEs are in different areas of a cell, such that they can be separated through different precoding (respectively, beamforming) at the BTS or network node or eNodeB, the two UEs may be served with the same time-frequency resources (i.e. PRBs) in a subframe by using different beams. This approach may be referred to as multi-user MIMO (MU-MIMO). Generally, using different beams or layers and/or precoders for transmissions to (and/or reception from) different UEs/terminals, e.g. on the same or at least partially overlapping resources, e.g. overlapping in time and/or frequency, may be called multi-user MIMO.

A beam may be defined and/or represented by, and/or associated to a precoder. It may be considered that a layer is associated to a beam, such that several layers may be associated to the same number of beams. To different layers there may be associated different information and/or data.

For example, the CRS based transmission mode, TM5 can be used for MU-MIMO transmission, in which case a UE may be informed (e.g., by configuring it accordingly) about the MU-MIMO operation. The precoder used and the transmit power offset are dynamically signalled to the UE through DCI format 1D (representing a configuration and/or allocation data). In DMRS based transmission modes TM9 and TM10, different DMRS ports and/or the same DMRS port with different scrambling codes can be assigned to the UEs for MU-MIMO transmission. In this case, MU-MIMO is transparent to UE, i.e., a UE is not informed about MU-MIMO.

Cell Specific Reference Signals are discussed in the following.

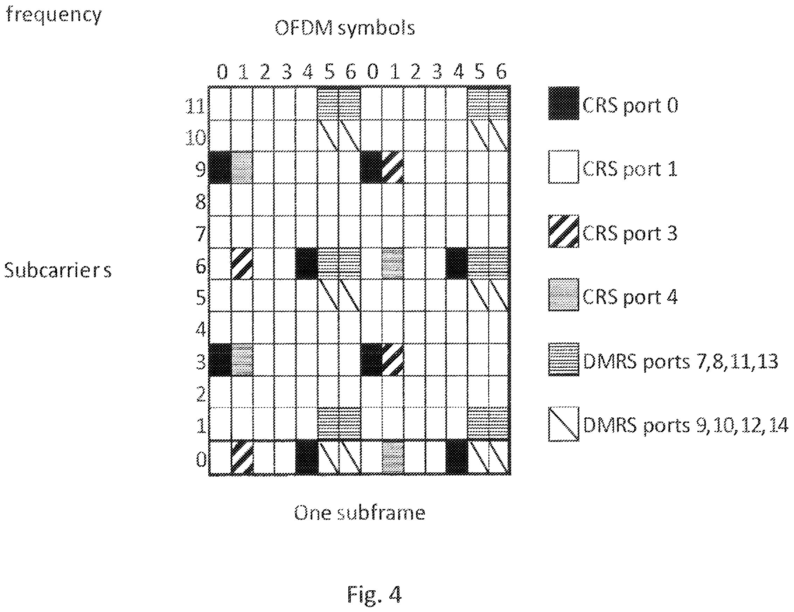

In LTE downlink, a number of reference signals (RS) are provided for channel estimation and demodulation purposes. There is one reference signal transmitted per, and/or associated to an, antenna port. An antenna port is defined such that the channel over which a symbol on the antenna port is conveyed can be inferred from the channel over which another symbol on the same antenna port is conveyed (a channel in this context may refer to the actual physical transmission channel, which may e.g. include the transmission path, respectively a channel may represent the channel transmission conditions/quality). One DL RS is the Cell specific Reference Signal (CRS). CRSs are transmitted in every subframe and over the entire frequency band. Up to four CRS ports are supported. CRSs are transmitted on a grid of resource elements (REs) in each PRB and can be used for downlink channel estimation purposes. An example of the CRS RE locations in a PRB is shown in Figure 4. The frequency locations of the CRS REs are cell dependent and may be shifted for cells with different physical cell IDs. For channel estimation, the channels on the CRS REs are first estimated (by a UE/terminal). The channels on the data REs are then estimated by interpolation or filtering the channels estimated on the CRS REs.

Since CRSs are cell specific, i.e. they are transmitted to all UEs in a cell, for different UEs, the downlink transmit power and precoding for PDSCH may be different for different UEs. Therefore, for correct demodulation and channel quality reporting, the power offset and precoder used for PDSCH transmission to a UE need to be signalled to the UE. Currently, the power offset is semi-statically signalled to a UE using a parameter called $P_A$. $P_A$ is defined as the ratio between the energy per RE (EPRE) of CRS and the EPRE of PDSCH in an OFDM symbol not containing CRS. The range of $P_A$ is from -6dB to +3dB. A Precoder is dynamically signalled to a UE. Figure 4 shows CRS and DMRS patterns in LTE.

DL Demodulation Reference Signal (DMRS) are discussed in the following.

DMRS is also used for downlink channel estimation and demodulation. Unlike CRS, DMRS transmission is UE-specific, i.e. it is only transmitted when there is DL data transmission to a UE. There are eight DMRS ports (ports 7 to 15) defined in LTE and up to eight layers of data can be supported. The DMRS port used is dynamically indicated in the associated PDCCH. The DRMS are transmitted on certain fixed REs in a PRB. The RE pattern for port 7 and port 8 are shown in Figure 4. Ports 7 and 8 occupy the same REs in a PRB and are multiplexed with orthogonal codes. DMRS is precoded with the same precoder as the data. For DMRS ports 7 and 8, they are also transmitted with the same per RE power as the associated PDSCH data. Therefore, precoder and transmit power offset are not needed at a UE for channel estimation and demodulation purpose.

For any of the antenna ports $p \in \{7,8,...,\upsilon+6\}$, where $\upsilon \in \{1,2,3,4,5,6,7,8\}$ is the number of layers used for transmission of the PDSCH, the reference-signal sequence $r(m)$ is defined by

$$r(m) = \frac{1}{\sqrt{2}}\left(1 - 2 \cdot c(2m)\right) + j\frac{1}{\sqrt{2}}\left(1 - 2 \cdot c(2m+1)\right), \qquad m = \begin{cases} 0,1,...12N_{RB}^{max,DL} - 1 & \text{normal cyclic prefix} \\ 0,1,...16N_{RB}^{max,DL} - 1 & \text{extended cyclic prefix} \end{cases} .$$

wherein $c(i)$ is a pseudo-random sequence defined in clause 7.2 of TS36.211, $N_{RB}^{max,DL}$ is the maximum number of RBs defined in the LTE downlink. The pseudo-random sequence generator shall be initialised with

$$c_{init} = \left(\lfloor n_s / 2 \rfloor + 1\right) \cdot \left(2n_{ID}^{(n_{SCID})} + 1\right) \cdot 2^{16} + n_{SCID}$$

at the start of each subframe. The quantities $n_{ID}^{(i)}$, $i = 0,1$, are given by

- $n_{\text{ID}}^{(i)} = N_{\text{ID}}^{\text{cell}}$ if no value for $n_{\text{ID}}^{\text{DMRS},i}$ is provided by higher layers or if DCI format 1A, 2B or 2C is used for the DCI associated with the PDSCH transmission

- $n_{\text{ID}}^{(i)} = n_{\text{ID}}^{\text{DMRS},i}$ otherwise.

The value of $n_{\text{SCID}}$ is zero unless specified otherwise. For a PDSCH transmission on ports 7, 8, 11 or 13, $n_{\text{SCID}}$ is given by the DCI format 2B, 2C or 2D as described in 3GPP TS 36.212, in association with the PDSCH transmission.

In the case of DCI format 2C or 2D, $n_{\text{SCID}}$ is given by Tables 5.3.3.1.5C-1 and 5.3.3.1.5C-2 in 3GPP TS 36.212 and copied below, where the "value" is signaled by a field with 3 or 4 bits in DCI 2C or 2D. Table 5.3.3.1.5C-2 was added in Rel-13 in order to allow more MU-MIMO layers to be co-scheduled. For a given scrambling ID, it can indicate to a UE receiving one layer that it is served on one of ports 7, 8, 11, or 13, meaning that up to 4 UEs can be co-scheduled per scrambling ID. By contrast, Table 5.3.3.1.5C-1 used in Rel-12 can indicate to a UE receiving one layer that it is served on one of ports 7 or 8, meaning that up to 2 UEs can be co-scheduled per scrambling ID. Therefore, the Rel-13 specifications can allow up to 8 total UEs to be co-scheduled in MU-MIMO on the two scrambling IDs, whereas the Rel-12 specifications allow up to 4 total UEs.

Table 5.3.3.1.5C-2 has entries with 'OCC=2' and 'OCC=4', which might be understood as orthogonal cover code lengths of 2 or 4 for the reference signals associated with the antenna ports listed. It should be noted that these 'OCC=2' and 'OCC=4' indications are somewhat misleading. As can be seen in Table 6.10.3.2-1 below, the DMRS orthogonal cover code lengths are always 4 symbols long for the normal cyclic prefix. The intention of indicating 'OCC=2' or 'OCC=4' to the UE is that that the UE may treat the antenna port as having a DMRS with a length of 2 or 4 cover code, and thus may combine a maximum of either 2 or 4 DMRS symbols when forming its channel estimates of that antenna port. A length of 2 means that the UE can form two channel estimates, one per slot and thereby the UE can compare these two estimates and estimate the difference in the channel over time. This leads to increased robustness to UE mobility, i.e. the UE can compensate for the time variant channel over the time of a PDSCH transmission. In case OCC length 4 is used on the other hand, then only a single channel estimate occasion is obtained, hence there is no possibility for the UE to track the channel time variations in this case.

Generally, a combination length is defined, which represents and/or indicates the maximum number of reference symbols combinable for a channel estimate and/or for performing measurement/measuring. The combination length is configured and/or configurable, e.g. by a network node. OCC is an example for a combination length. It may be considered that a network node is adapted to determine, and/or determines, and/or comprise a length determining module for determining, a combination length for a transmission, in particular for a layer of transmission/s. Determining may comprise reading from a table and/or be performed according to a standard.

A terminal or UE is generally be adapted for, and/or comprise an estimation module for, and/perform channel estimating, e.g. based on a configuration. Channel estimating may comprise determining a channel estimate on one or more channels and/or reference symbols, e.g. based on a combination length. Determining a channel estimate and/or channel estimating comprises performing measurement/s and/or measuring and/or calculations and/or estimations based on measurement/s, and/or providing and/or transmitting a measurement report.

**Table 5.3.3.1.5C-1: Antenna port(s), scrambling identity and number of layers indication**

| One Codeword: Codeword 0 enabled, Codeword 1 disabled | | Two Codewords: Codeword 0 enabled, Codeword 1 enabled | |
|---|---|---|---|
| Value | Message | Value | Message |
| 0 | 1 layer, port 7, $n_{SCID}$=0 | 0 | 2 layers, ports 7-8, $n_{SCID}$=0 |
| 1 | 1 layer, port 7, $n_{SCID}$=1 | 1 | 2 layers, ports 7-8, $n_{SCID}$=1 |
| 2 | 1 layer, port 8, $n_{SCID}$=0 | 2 | 3 layers, ports 7-9 |
| 3 | 1 layer, port 8, $n_{SCID}$=1 | 3 | 4 layers, ports 7-10 |
| 4 | 2 layers, ports 7-8 | 4 | 5 layers, ports 7-11 |
| 5 | 3 layers, ports 7-9 | 5 | 6 layers, ports 7-12 |
| 6 | 4 layers, ports 7-10 | 6 | 7 layers, ports 7-13 |
| 7 | Reserved | 7 | 8 layers, ports 7-14 |

**Table 5.3.3.1.5C-2: Antenna port(s), scrambling identity and number of layers indication**

| One Codeword:<br>Codeword 0 enabled, Codeword 1 disabled | | Two Codewords:<br>Codeword 0 enabled, Codeword 1 enabled | |
|---|---|---|---|
| Value | Message | Value | Message |
| 0 | 1 layer, port 7, $n_{SCID}$=0 (OCC=2) | 0 | 2 layer, port 7-8, $n_{SCID}$=0 (OCC=2) |
| 1 | 1 layer, port 7, $n_{SCID}$=1 (OCC=2) | 1 | 2 layer, port 7-8, $n_{SCID}$=1 (OCC=2) |
| 2 | 1 layer, port 8, $n_{SCID}$=0 (OCC=2) | 2 | 2 layer, port 7-8, $n_{SCID}$=0 (OCC=4) |
| 3 | 1 layer, port 8, $n_{SCID}$=1 (OCC=2) | 3 | 2 layer, port 7-8, $n_{SCID}$=1 (OCC=4) |
| 4 | 1 layer, port 7, $n_{SCID}$=0 (OCC=4) | 4 | 2 layer, port 11,13, $n_{SCID}$=0 (OCC=4) |
| 5 | 1 layer, port 7, $n_{SCID}$=1 (OCC=4) | 5 | 2 layer, port 11,13, $n_{SCID}$=1 (OCC=4) |
| 6 | 1 layer, port 8, $n_{SCID}$=0 (OCC=4) | 6 | 3 layer, port 7-9 |
| 7 | 1 layer, port 8, $n_{SCID}$=1 (OCC=4) | 7 | 4 layer, port 7-10 |
| 8 | 1 layer, port 11, $n_{SCID}$=0 (OCC=4) | 8 | 5 layer, port 7-11 |
| 9 | 1 layer, port 11, $n_{SCID}$=1 (OCC=4) | 9 | 6 layer, port 7-12 |
| 10 | 1 layer, port 13, $n_{SCID}$=0 (OCC=4) | 10 | 7 layers, ports 7-13 |
| 11 | 1 layer, port 13, $n_{SCID}$=1 (OCC=4) | 11 | 8 layers, ports 7-14 |
| 12 | 2 layers, ports 7-8 | 12 | Reserved |
| 13 | 3 layers, ports 7-9 | 13 | Reserved |
| 14 | 4 layers, ports 7-10 | 14 | Reserved |
| 15 | Reserved | 15 | Reserved |

According to TS36.211, for antenna ports $p$= 7, $p$ = 8 or $p$ = 7,8,...,$v$+6, in a physical resource block with frequency-domain index $n_{PRB}$ assigned for the corresponding PDSCH transmission, a part of the reference signal sequence $r(m)$ shall be mapped to complex-valued modulation symbols $a_{k,l}^{(p)}$ in a subframe according to

Normal cyclic prefix:

$$a_{k,l}^{(p)} = w_p(l') \cdot r(3 \cdot l' \cdot N_{RB}^{max,DL} + 3 \cdot n_{PRB} + m')$$

where

$$w_p(i) = \begin{cases} \overline{w}_p(i) & (m' + n_{PRB}) \bmod 2 = 0 \\ \overline{w}_p(3-i) & (m' + n_{PRB}) \bmod 2 = 1 \end{cases}$$

$$k = 5m' + N_{sc}^{RB} n_{PRB} + k'$$

$$k' = \begin{cases} 1 & p \in \{7,8,11,13\} \\ 0 & p \in \{9,10,12,14\} \end{cases}$$

$$l = \begin{cases} l' \bmod 2 + 2 & \text{if in a special subframe with configuration 3, 4, 8 or 9 (see Table 4.2-1)} \\ l' \bmod 2 + 2 + 3\lfloor l'/2 \rfloor & \text{if in a special subframe with configuration 1, 2, 6, or 7 (see Table 4.2-1)} \\ l' \bmod 2 + 5 & \text{if not in a special subframe} \end{cases}$$

$$l' = \begin{cases} 0,1,2,3 & \text{if } n_s \bmod 2 = 0 \text{ and in a special subframe with configuration 1, 2, 6, or 7 (see Table 4.2-1)} \\ 0,1 & \text{if } n_s \bmod 2 = 0 \text{ and not in special subframe with configuration 1, 2, 6, or 7 (see Table 4.2-1)} \\ 2,3 & \text{if } n_s \bmod 2 = 1 \text{ and not in special subframe with configuration 1, 2, 6, or 7 (see Table 4.2-1)} \end{cases}$$

$$m' = 0,1,2$$

The sequence $\overline{w}_p(i)$ is given by Table 6.10.3.2-1, which is copied below.

**Table 6.10.3.2-1: The sequence $\overline{w}_p(i)$ for normal cyclic prefix 0**

| Antenna port $p$ | $[\overline{w}_p(0)\ \overline{w}_p(1)\ \overline{w}_p(2)\ \overline{w}_p(3)]$ |
|---|---|
| 7 | [+1 +1 +1 +1] |
| 8 | [+1 -1 +1 -1] |
| 9 | [+1 +1 +1 +1] |
| 10 | [+1 -1 +1 -1] |
| 11 | [+1 +1 -1 -1] |
| 12 | [-1 -1 +1 +1] |
| 13 | [+1 -1 -1 +1] |
| 14 | [-1 +1 +1 -1] |

So antenna ports 7, 8, 11 and 13 occupy the same time-frequency resources (REs), and for a given PRB, share the same DMRS sequence $r(3 \cdot l' \cdot N_{RB}^{max,DL} + 3 \cdot n_{PRB} + m')$ in different OFDM symbols. They are different only in the cover codes $\overline{w}_p(i)$. The same is true for ports 9, 10, 12, and 14.

Extended cyclic prefix:

$$a_{k,l}^{(p)} = w_p(l' \bmod 2) \cdot r(4 \cdot l' \cdot N_{RB}^{max,DL} + 4 \cdot n_{PRB} + m')$$

where

$$w_p(i) = \begin{cases} \overline{w}_p(i) & m' \bmod 2 = 0 \\ \overline{w}_p(1-i) & m' \bmod 2 = 1 \end{cases}$$

$$k = 3m' + N_{sc}^{RB} n_{PRB} + k'$$

$$k' = \begin{cases} 1 & \text{if } n_s \bmod 2 = 0 \text{ and } p \in \{7,8\} \\ 2 & \text{if } n_s \bmod 2 = 1 \text{ and } p \in \{7,8\} \end{cases}$$

$l = l'$ mod2 + 4

$$l' = \begin{cases} 0,1 & \text{if } n_s \bmod 2 = 0 \text{ and in a special subframe with configuration } 1, 2, 3, 5 \text{ or } 6 \text{ (see Table 4.2-1)} \\ 0,1 & \text{if } n_s \bmod 2 = 0 \text{ and not in a special subframe} \\ 2,3 & \text{if } n_s \bmod 2 = 1 \text{ and not in a special subframe} \end{cases}$$

$m' = 0,1,2,3$

The sequence $\overline{w}_p(i)$ is given by Table 6.10.3.2-2 in 0, which is copied below.

**Table 6.10.3.2-2: The sequence $\overline{w}_p(i)$ for extended cyclic prefix 0**

| Antenna port $p$ | $[\overline{w}_p(0)\ \overline{w}_p(1)]$ |
|---|---|
| 7 | [+1 +1] |
| 8 | [-1 + 1] |

For extended cyclic prefix, UE-specific reference signals are not supported on antenna ports 9 to 14.

Resource elements $(k,l)$ used for transmission of UE-specific reference signals to one UE on any of the antenna ports in the set $S$, where s = {7,8,11,13} or $S$ = {9,10,12,14} shall

- not be used for transmission of PDSCH on any antenna port in the same slot, and
- not be used for UE-specific reference signals to the same UE on any antenna port other than those in $S$ in the same slot.

With Rel-13 DCI formats 2C or 2D, single layer MU-MIMO transmission on ports 7, 8, 11, and 13 can be signaled to a UE together with indicating OCC=4, allowing 4 UEs to be co-multiplexed using these ports with one layer each. Since OCC=4 is used, the channel should be relatively constant over the length of the OCC=4 reference signal sequence. Therefore, these UEs need to have low mobility or to be stationary. Furthermore, if these UEs are served with different transmission points (TPs), the TPs need to be sufficiently well synchronized. A transmission point may generally be any radio network node adapted for transmitting signals to and/or receiving signals from one or more UEs. Different transmission points may utilize different antenna arrays or antenna arrangements. A transmission point may be represented e.g. by an eNodeB or gNodeB, a relay node or a macro node or micro (or smaller) node.

Also, these Rel-13 DCI formats can alternatively indicate single layer MU-MIMO transmission on ports 7, 8 with OCC=2, allowing at most 2 UEs to be co-multiplexed using these two ports. OCC length 2 is useful for UEs with less stationary channels (e.g. with higher mobility or that are served by a TP that is not well synchronized with other TPs) that benefit from the ability to track the channel variations in time during a transmission time interval of the PDSCH.

It is suggested to support single layer MU-MIMO transmission on a mix of different combination lengths, e.g. a mix of OCC=2 and OCC=4 ports. In a typical cell, some UEs may have relatively rapidly varying channels (e.g. high mobility or loosely synchronized TPs), while others have slowly varying channels (e.g. low mobility, and/or tightly synchronized multi-TP transmissions, or single point transmission). As proposed, mixing MU-MIMO scheduling between these categories of UEs is enabled, improving the MU-MIMO scheduling opportunities and enabling improvement of the achievable cell spectral efficiency.

Therefore, there are discussed approaches to support co-scheduling of UEs with different combination lengths, e.g. OCC=2 and OCC=4 UEs. Configurations for different UEs may reflect such co-scheduling.

For example, it may be considered that when the eNB signals to the UE that a UE may assume a length 2 OCC of the demodulation reference signal is used for an antenna port associated with a single layer PDSCH transmission intended for the UE, then the UE shall not assume that a pre-defined antenna port, for example given by specification, having a length 4 OCC demodulation reference signals is associated with PDSCHs transmitted to other UEs.

This allows mixed MU-MIMO scheduling of up to two UEs assuming OCC length 4 and one UE assuming OCC length 2 DMRS for PDSCH demodulation, effectively allowing for mixing co-scheduling of UEs in the same PRBs whose channels vary at different rates (e.g. with different mobility (speeds) or different levels of synchronization in multi-TP transmission).

Additional aspects are 1) that all 3 antenna ports should be associated with a single scrambling identity, and 2) that each of the three PDSCHs are individually transmitted on a single spatial layer.

Thus, a limitation of current LTE PDSCH scheduling on MU-MIMO is overcome. Effectively, MU-MIMO single layer co-multiplexing capacity can be increased to 3 UEs when a UE is needs to be scheduled with an OCC=2 antenna port (e.g. due to mobility or loosely synchronized multi-TP transmission), as compared to the current specification where at most 2 UEs can be co-multiplexed whenever one of them is served with an OCC=2 antenna port.

The solution may utilize the structure of the orthogonal DMRS cover codes (OCC) and the newly introduced single layer transmission with ports 7, 8, 11,13 with OCC=4 to allow one UE scheduled with one layer on an OCC=2 antenna port (i.e. port 7 or 8 ) to be co-scheduled with one or two other UEs each scheduled with one layer each on an OCC=4 antenna port. Therefore, up to 3 UEs can be co-scheduled when one of them is served with an OCC=2 antenna port.

As described in the above, LTE Rel-13 antenna ports all use reference signal sequences of length 4, so the 'OCC=2' and 'OCC=4' indications are somewhat misleading. The length signaling may be used to indicate the maximum number of DMRS symbols a UE could or may use when forming its channel estimates from the DMRS (a combination length), rather than the total length of the reference signal sequence. When a UE is signaled an antenna port with OCC=4 and uses 4 symbols to form its channel estimates from its assigned antenna port, then 3 other antenna ports with OCC=4 using the same scrambling ID will have orthogonal reference signal sequences to the reference signal sequence the UE uses. This allows up to 4 UEs (each being served with a single spatial layer) to be co-scheduled for MU-MIMO, since the UE's channel estimate of the serving cell will not be corrupted by the other 3 reference signals transmitted to other UEs.

While using OCC=4 allows higher MU-MIMO multiplexing capacity, it is also useful to indicate OCC=2. If a UE is signaled OCC=2, as when scheduled a single code word and using values 0,1,2 or 3 in Table 5.3.3.1.5C-2 above, it may choose to combine only REs from adjacent OFDM symbols, for example when the UE is traveling at high enough speed that the channel is not sufficiently constant across more than two symbols for good averaging. The channel estimates from the two slots then may be used to further estimate the slope of the channel time variation.

It is observed that such a UE that uses OCC=2 for channel estimation could be co-scheduled in the same PRB resource with a (perhaps slower traveling) UE that is signaled as having an OCC=4 antenna port (values 4-11 in the Table above), if the reference signal cover code used for the OCC=4 port is orthogonal to port signaled as having the OCC=2 when only adjacent cover code symbols are combined (rather than all 4 symbols in the antenna ports' reference signal sequences).

For example, antenna ports 8 and 13 with OCC=4 are orthogonal to antenna port 7 signaled with OCC=2 when adjacent cover code symbols are combined. Similarly, antenna ports 7 and 11 signaled with OCC=4 are orthogonal to antenna port 8 with OCC=2 when adjacent cover code symbols are combined.

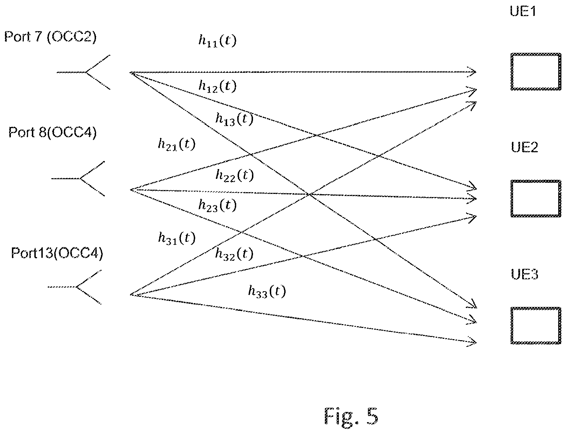

An example is shown in 5, where UE1 with port 7 and OCC=2 are multiplexed together with UE2 and UE3 configured with ports 8 and 13 and OCC=4, respectively. $h_{zj}(t)$, $h_{2j}(t)$ and $h_{3j}(t)$ are the channel between ports 7, 8, and 13 and UEj (j=1,2,3), respectively. $h_{11}(t)$ is the desired channel for UE1. Similarly, $h_{22}(t)$ and $h_{33}(t)$ are the desired channels for UE2 and UE3, respectively. Below it is shown that each of the three UEs can obtain its own desired channel without any interference from the other ports. Specifically, Figure 5 shows an example of multiplexing three UEs on port 7 (OCC=2) and Ports 8 and 13 (OCC=4)

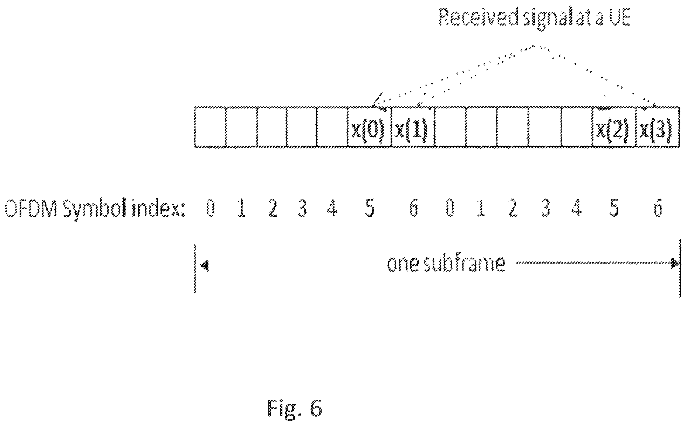

Figure 6 shows received signals at a UE on the DMRS REs at a subcarrier within a subframe. For UE1, the received DMRS signals are:

$$x(i) = r\overline{w}_7(i)h_{11}(i) + r\overline{w}_8(i)h_{21}(i) + r\overline{w}_{13}(i)h_{31}(i) + n_1(i), i = 0,1,2,3$$

Herein, r is the transmitted DMRS sequence on the subcarrier, $\overline{w}_p(i)$ is the orthogonal cover code associated with antenna port $p \in \{7,8,13\}$ as shown in Table 6.10.3.2-1, and $n_i(i)$ is the receiver noise of UE1. Applying $\overline{w}_7(i)$ to $x(i)$ and summing over the first two adjacent symbols leads to:

$$\sum_{i=0}^{1} \overline{w}_7(i)x(i) = \sum_{i=0}^{1} [r\overline{w}_7(i)\,\overline{w}_7(i)h_{11}(i) + r\,\overline{w}_7(i)\overline{w}_8(i)h_{21}(i) + r\,\overline{w}_7(i)\overline{w}_{13}(i)h_{31}(i) + \overline{w}_7(i)n_1(i)]$$

Since UE1 is configured with OCC=2, it is reasonable to assume $h_{i1}(0) = h_{i1}(1)$ and $h_{i1}(2) = h_{i1}(3)$, i.e. the channel doesn't change over two adjacent OFDM symbols.

Accordingly,

$$\sum_{i=0}^{1} \overline{w}_7(i)x(i)$$

$$= rh_{11}(0)\sum_{i=0}^{1} \overline{w}_7(i)\,\overline{w}_7(i) + rh_{21}(0)\sum_{i=0}^{1} \overline{w}_7(i)\overline{w}_8(i) + rh_{31}(0)\sum_{i=0}^{1} \overline{w}_7(i)\overline{w}_{13}(i) + \sum_{i=0}^{1} \overline{w}_7(i)n_1(i)$$

From Table 6.10.3.2-1, it follows

$$\sum_{i=0}^{1} \overline{w}_7(i)\overline{w}_8(i) = \sum_{i=0}^{1} \overline{w}_7(i)\overline{w}_{13}(i) = 0$$

and

$$\sum_{i=0}^{1} \overline{w}_7(i)\overline{w}_7(i) = 2 \,,$$

thus

$$\sum_{i=0}^{1} \overline{w}_7(i)x(i) = 2rh_{11}(0) + \sum_{i=0}^{1} \overline{w}_7(i)n_1(i)$$

It can be seen the DMRS signals from port 8 and 13 have been removed above. Similarly, for the last two DMRS symbols:

$$\sum_{i=2}^{3} \overline{w}_7(i)x(i)$$

$$= \sum_{i=2}^{3} r\overline{w}_7(i)\,\overline{w}_7(i)h_{11}(i) + r\,\overline{w}_7(i)\overline{w}_8(i)h_{21}(i) + r\overline{w}_7(i)\overline{w}_{13}(i)h_{31}(i) + \overline{w}_7(i)n_1(i)$$

$$= rh_{11}(2)\sum_{i=2}^{3} \overline{w}_7(i)\,\overline{w}_7(i) + rh_{21}(2)\sum_{i=2}^{3} \overline{w}_7(i)\overline{w}_8(i) + rh_{31}(2)\sum_{i=2}^{3} \overline{w}_7(i)\overline{w}_{13}(i) + \sum_{i=2}^{3} \overline{w}_7(i)n_1(i)$$

$$= 2rh_{11}(2) + n(2) + n(3)$$

The channel estimation associated with port 7 can be obtained as

$$\hat{h}_{11}(0) = \frac{1}{2r}\sum_{i=0}^{1} \overline{w}_7(i)x(i)$$

$$\hat{h}_{11}(2) = \frac{1}{2r}\sum_{i=2}^{3} \overline{w}_7(i)x(i)$$

For UE2, the received DMRS signals are

$$x(i) = r\overline{w}_7(i)h_{12}(i) + r\overline{w}_8(i)h_{22}(i) + r\overline{w}_{13}(i)h_{32}(i) + n_2(i), i = 0,1,2,3$$

and $n_2(i)$ is the receiver noise of UE2. Since OCC=4 is configured for UE2, it is reasonable to assume that the channel is constant over the four DMRS REs, i.e. $h_{i2}(0) = h_{i2}(1) = h_{i1}(2) = h_{i2}(3)$. Applying $\overline{w}_8(i)$ to $x(i)$ and summing over the four symbols results in:

$$\sum_{i=0}^{3} \overline{w}_8(i)x(i) = \sum_{i=0}^{3}[r\overline{w}_8(i)\,\overline{w}_7(i)h_{12}(i) + r\,\overline{w}_8(i)\overline{w}_8(i)h_{22}(i) + r\,\overline{w}_8(i)\overline{w}_{13}(i)h_{32}(i) + \overline{w}_8(i)n_2(i)]$$

$$= rh_{12}(0)\sum_{i=0}^{3}\overline{w}_8(i)\,\overline{w}_7(i) + rh_{22}(0)\sum_{i=0}^{3}\overline{w}_8(i)\overline{w}_8(i) + rh_{32}(0)\sum_{i=0}^{3}\overline{w}_8(i)\overline{w}_{13}(i) + \sum_{i=0}^{3}\overline{w}_8(i)n_2(i)$$

From Table 6.10.3.2-1, there follows

$$\sum_{i=0}^{3}\overline{w}_8(i)\overline{w}_7(i) = \sum_{i=0}^{3}\overline{w}_8(i)\overline{w}_{13}(i) = 0$$

and

$$\sum_{i=0}^{3}\overline{w}_8(i)\overline{w}_8(i) = 4 ,$$

thus

$$\sum_{i=0}^{3}\overline{w}_8(i)x(i) = 4rh_{22}(0) + \sum_{i=0}^{3}\overline{w}_8(i)n_2(i)$$

Again, the effects of port 7 and 13 have been removed. The channel estimation associated with port 8 at UE2 can be obtained as

$$\hat{h}_{22}(0) = \frac{1}{4r}\sum_{i=0}^{3}\overline{w}_8(i)x(i)$$

Similarly, at UE3, the received DMRS signals are

$$x(i) = r\overline{w}_7(i)h_{13}(i) + r\overline{w}_8(i)h_{23}(i) + r\overline{w}_{13}(i)h_{33}(i) + n_3(i), i = 0,1,2,3$$

and $n_3(i)$ is the receiver noise of UE3. Since OCC=4 is also configured for UE3, it is reasonable to assume that the channel is constant over the four DMRS REs, i.e. $h_{i2}(0) = h_{i3}(1) = h_{i2}(2) = h_{i3}(3)$ for i=1,2,3. Thus,

$$\sum_{i=0}^{3} \overline{w}_{13}(i)x(i) = \sum_{i=0}^{3} [r\overline{w}_{13}(i)\,\overline{w}_{7}(i)h_{13}(i) + r\,\overline{w}_{13}(i)\overline{w}_{8}(i)h_{23}(i) + r\,\overline{w}_{13}(i)\overline{w}_{13}(i)h_{33}(i) + \overline{w}_{13}(i)n_{3}(i)]$$

$$= rh_{13}(0)\sum_{i=0}^{3}\overline{w}_{13}(i)\,\overline{w}_{7}(i) + r\,h_{23}(0)\sum_{i=0}^{3}\overline{w}_{13}(i)\overline{w}_{8}(i) + rh_{33}(0)\sum_{i=0}^{3}\overline{w}_{13}(i)\overline{w}_{13}(i) + \sum_{i=0}^{3}\overline{w}_{13}(i)n_{3}(i)$$

From Table 6.10.3.2-1, there follows

$$\sum_{i=0}^{3}\overline{w}_{13}(i)\overline{w}_{7}(i) = \sum_{i=0}^{3}\overline{w}_{13}(i)\overline{w}_{8}(i) = 0$$

and

$$\sum_{i=0}^{3}\overline{w}_{13}(i)\overline{w}_{13}(i) = 4,$$

thus

$$\sum_{i=0}^{3}\overline{w}_{13}(i)x(i) = 4rh_{33}(0) + \sum_{i=0}^{3}\overline{w}_{13}(i)n_{3}(i)$$

It can be seen that the effects of port 7 and 8 have been removed. The channel estimation associated with port 13 at UE3 can be obtained as

$$\hat{h}_{33}(0) = \frac{1}{4r}\sum_{i=0}^{3}\overline{w}_{13}(i)x(i)$$

In general, the correlation of antenna ports 7, 8, to ports 7, 8, 11, and 13 is shown in the tables below to illustrate when ports are orthogonal over two adjacent OFDM symbols. The correlation between port 7 and port $p$ can be expressed as $\sum_{k=0}^{1}\overline{w}_{7}(k)\overline{w}_{p}(k)$ over the first and second OFDM symbols and $\sum_{k=2}^{3}\overline{w}_{7}(k)\overline{w}_{p}(k)$ over the third and fourth OFDM symbols. Then, if the reference signal sequences for antenna ports 8 or 13 are combined with port 7, the correlation [

$$\left[\sum_{k=0}^{1}\overline{w}_{7}(k)\overline{w}_{p}(k), \sum_{k=2}^{3}\overline{w}_{7}(k)\overline{w}_{p}(k)\right] = [0,0] = \text{holds}$$

That is, antenna port 8 and 13 reference signals are orthogonal to antenna port 7's reference signal over two adjacent OFDM symbols and thus cancel at a UE receiver configured with port 7. By contrast, the correlation between antenna port 11's reference signal and antenna port 7 is [2 -2], and, thus, it does not cancel at the UE receiver and will distort channel estimates of antenna port 7. Similar observations can be made with respect to antenna port 8: ports 7 and 11 are orthogonal to port 8 over two adjacent OFDM symbols, while port 13 is not orthogonal to antenna port 8 over two adjacent OFDM symbols.

| Antenna port $p$ | $[\overline{w}_{p}(0)\ \overline{w}_{p}(1)\ \overline{w}_{p}(2)\ \overline{w}_{p}(3)]$ |
|---|---|
| 7 | [+1 +1 +1 +1] |
| 8 | [+1 -1 +1 -1] |

(continued)

| Antenna port $p$ | $[\overline{w}_p(0)\ \overline{w}_p(1)\ \overline{w}_p(2)\ \overline{w}_p(3)]$ |
|---|---|
| 11 | [+1 +1 -1 -1] |
| 13 | [+1 -1 -1 +1] |

| Antenna port $p$ | $\left[\sum_{k=0}^{1}\overline{w}_7(k)\overline{w}_p(k)\quad \sum_{k=2}^{3}\overline{w}_7(k)\overline{w}_p(k)\right]$ | $\left[\sum_{k=0}^{1}\overline{w}_8(k)\overline{w}_p(k)\quad \sum_{k=2}^{3}\overline{w}_8(k)\overline{w}_p(k)\right]$ |
|---|---|---|
| 7 | [2 2] | [0 0] |
| 8 | [0 0] | [2 2] |
| 11 | [2 -2] | [0 0] |
| 13 | [0 0] | [2 -2] |

The approaches also consider the Rel-13 cover code structure: antenna ports 11 and 13 are only signaled with OCC=4. This means that if a UE is served with single layer transmission on either antenna port 11 or 13, that UE assumes that other UEs may be co-scheduled on one or more of OCC=4 antenna ports {7,8,13} or {7,8,11}, respectively. The served UE does not need to consider if OCC=2 is used for the co-scheduled UEs. Note that these assumptions for OCC=4 for antenna ports 11 and 13 are already specified in Rel-13, and so the Rel-13 specification can be enhanced to support mixed OCC=2 and OCC=4 transmission using ports 11 and 13 by only constraining the port 7 and 8 OCC=2 behavior.

In order to get good MU-MIMO reception, a UE needs to take into account interference transmitted on antenna ports not intended for it, i.e. ports not associated with the scheduled PDSCH as indicated in a DCI message for the UE. This means that a UE can't assume the antenna ports not assigned to it are unoccupied or used by other UEs with interfering transmissions. The approaches described therefore may include indicating to, and/or configuring, a UE served by antenna port 7 with OCC=2 and/or that it can't assume that antenna ports 8 (with OCC=4) or 13 are not associated with transmission of PDSCH to another UE. Similarly, the approaches may comprise indicating to, and/or configuring, a UE served by antenna port 8 with OCC=2 and/or that it can't assume that antenna ports 7 (with OCC=4) or 11 are not associated with transmission of PDSCH to another UE. The approaches may further comprise indicating to, and/or configuring, a UE served by a single layer transmission on port 11 with OCC=4 and that is co-scheduled with an OCC=2 UE that it can't assume that antenna ports 7, 8, or 13 are not associated with transmission of PDSCH to another UE, and/or indicating to, and/or configuring, a UE served by single layer transmission on port 13 with OCC=4 and/or that it can't assume that antenna ports 7, 8, or 11 are not associated with transmission of PDSCH to another UE.

The approaches may additionally or alternatively be described according to how it can be specified with changes to section 7.1.1 of. This is shown below, wherein the underlined text is added to version 13.0.1. Note that in this text below, reference [4] refers to 3GPP TS 36.212 V13.0.0, and reference [3] refers to 3GPP TS 36.211 V13.0.0.

--------------------------------Suggested text changes in 3GPP TS 36.213--------------------------

--------7.1.1    Single-antenna port scheme

For the single-antenna port transmission schemes (port 0/5/7/8/11/13) of the PDSCH, the UE may assume that an eNB transmission on the PDSCH would be performed according to subclause 6.3.4.1 of [3].

If the UE is not configured with higher layer parameter *dmrs-tableAlt*, and in case an antenna port $p \in \{7,8\}$ is used, the UE cannot assume that the other antenna port in the set $\{7,8\}$ is not associated with transmission of PDSCH to another UE.

If the UE is configured with higher layer parameter *dmrs-tableAlt*, and in case an antenna port $p \in \{7,8\}$ corresponding to one codeword values 0-3 in Table 5.3.3.1.5C-2 [4] is used

- If antenna port 7 is used, UE cannot assume that an antenna port in the set $\{8,13\}$ is not associated with transmission of PDSCH to another UE

- If antenna port 8 is used, the UE cannot assume that an antenna port in the set $\{7,11\}$ is not associated with transmission of PDSCH to another UE

If the UE is configured with higher layer parameter *dmrs-tableAlt*, and in case of single layer transmission scheme on antenna port $p \in \{7,8,11,13\}$ corresponding to one codeword values 5-11 in Table 5.3.3.1.5C-2 [4] is used, the UE cannot assume that the other antenna ports in the set $\{7,8,11,13\}$ is not associated with transmission of PDSCH to another UE.

-------------------------------------end of suggested text -----------------------------------

----------------

The approaches may be generalised. In future wireless standards, the use of DMRS (generally representing reference signaling, in particular UE specific reference signaling, USRS) with OCC length 8 or 12 (or generally different combination lengths) may be used, to be able to support up to eight or even more orthogonal layers. For instance, these USRS or DMRS may be placed in a single OFDM symbol and in the same way as was discussed earlier in this disclosure. In such a system, there is still a need to be able to schedule UEs with different rates of channel variation. When REs in a USRS/DMRS covered with an OCC or combination length extend in the frequency direction, there is a benefit to be able to co-schedule UEs with different channel delay profile, i.e. with different coherence bandwidth/frequency selectivity. In this case, a similar combination length or OCC structure and signalling of combination length or OCC length assumption to the UE can be used. Hence, an antenna port that can be assumed to have a shorter reference signal cover code can be co-multiplexed with transmissions on at least one antenna port with an antenna port whose reference signal cover code can be assumed to be longer as long as the short cover code is orthogonal to a part of the longer cover code.

For example, if the OCC=8 cover code for an antenna port is [1 1 1 1 1 1 1 1], a UE that is scheduled on this antenna port can be co-multiplexed with a UE with OCC=4 cover code [1 1 -1 -1] and even further those two UEs can be co-scheduled with a third UE on an antenna port having a OCC=2 cover code of [1 -1]. Hence, with this example, three UEs with different channel delay profiles can be co-scheduled in MU-MIMO while retaining DMRS orthogonality.

A Multi-point MU-MIMO Use Case is discussed on the following.

Another important use case for pairing DMRS ports with mixed OCC=2 and OCC=4 cover code lengths is in the area of multi-point MU-MIMO. When two different transmission points serve different UEs, the two transmission points may not be tightly synchronized, and transmissions from the two transmission points have a frequency offset. This frequency offset can translate into adverse effects such as Doppler spreads. Generally, length 2 OCC is less sensitive to such effects as OCC=2 covers two adjacent OFDM symbols. However, since length 4 OCC are spread across the two slots in a subframe, OCC=4 may lose its orthogonal property, e.g. due to Doppler spread.

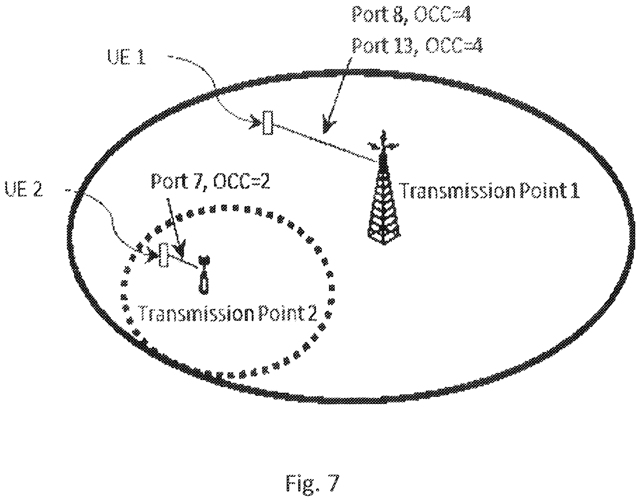

In such a case, the mixed OCC=2 and OCC=4 cover code lengths may be used advantageously under certain scenarios. Figure 7 shows such an example, wherein transmission point 1 has a larger coverage than transmission point 2. Transmission point 1 serves UE1 with 2 layers using DMRS ports 8 and 13 (both with OCC=4). Transmission point 2 serves UE2 with a single layer using DMRS port 7 (with OCC=2). Since UE2 uses an OCC=2 based DMRS port, it can still perform reasonably even if there is some frequency offset between the two transmission points. Due to the smaller coverage region of transmission point 2, UE1 (if it is sufficiently separated from transmission point 2) may not experience much interference from transmission point 2 and hence may still perform reasonably well even with OCC=4 based DMRS ports. If a OCC=4 based DMRS port is used for UE2 in this scenario, UE2 may suffer performance losses due to Doppler spread. Hence, mixed OCC=2 and OCC=4 can be used efficiently in this scenario. Figure 7 shows multi-point MU-MIMO with mixed OCC=2 and OCC=4 DMRS ports (Example 1).

Multi-point may generally refer to using multiple transmission points for transmission, in particular to UEs in the same cell, and/or transmissions associated to the same cell. The transmission points may be transmission points of a heterogenous network (HetNet).

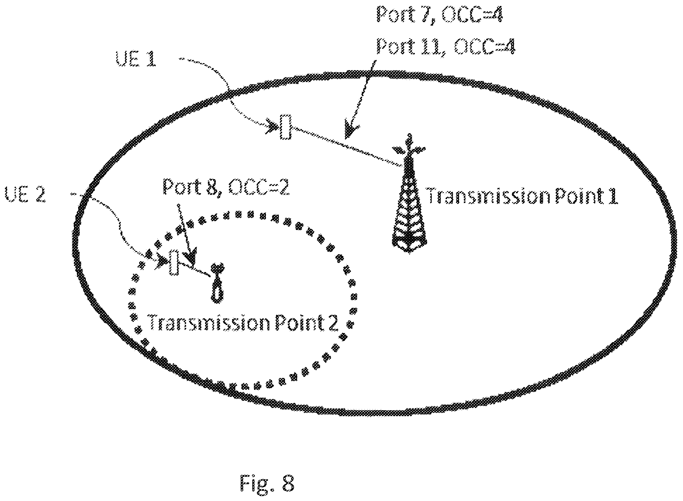

Figure 8 shows another example, wherein transmission point 1 has a larger coverage than transmission point 2. Transmission point 1 serves UE1 with 2 layers using DMRS ports 7 and 11 (both with OCC=4). Transmission point 2 serves UE2 with a single layer using DMRS port 8 (with OCC=2). Since UE2 uses an OCC=2 based DMRS port, it can still perform reasonably even if there is some frequency offset between the two transmission points. Due to the smaller coverage region of transmission point 2, UE1 (if it is sufficiently separated from transmission point 2) may not experience much interference from transmission point 2 and hence may still perform reasonably well even with OCC=4 based DMRS ports. If an OCC=4 based DMRS port is used for UE2 in this scenario, UE2 may suffer performance losses due to Doppler spread. Hence, mixed OCC=2 and OCC=4 can be used efficiently in this scenario.

Figure 8 shows multi-point MU-MIMO with mixed OCC=2 and OCC=4 DMRS ports (Example 2)

Although Transmission point 1 serves a single UE with two layers in the examples of Figure 7 and Figure 8, the use case in this scenario is equally valid if transmission point 1 serves two UEs with the abovementioned ports. These examples are listed below:

- Example 3:

  o Transmission point 1 serves 2 UEs with 1 layer each. First UE is served with DMRS port 8 with OCC=4. The second UE is served with DMRS port 13 with OCC=4.
  o Transmission point 2 serves 1 UE with 1 layer on DMRS port 7 with OCC=2.

- Example 4:

  o Transmission point 1 serves 2 UEs with 1 layer each. First UE is served with DMRS port 7 with OCC=4. The second UE is served with DMRS port 11 with OCC=4.
  o Transmission point 2 serves 1 UE with 1 layer on DMRS port 8 with OCC=2.

An aspect of the approaches may include that an antenna port that can be assumed to have a shorter reference signal cover code can be co-multiplexed with transmissions on at two least antenna ports with whose reference signal cover code can be assumed to be longer. Additionally, 1) the reference signals of the comultiplexed transmissions may all use a single scrambling identity, and/or 2) all three transmissions comprise PDSCHs that are each transmitted on a single spatial layer.

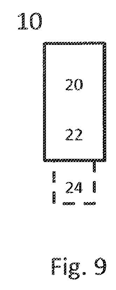

Figure 9 schematically shows a user equipment 10. User equipment 10 comprises control circuitry 20, which may comprise a controller connected to a memory. Any module of a user equipment may implemented in and/or executable by, user equipment, in particular the control circuitry 20. User equipment 10 also comprises radio circuitry 22 providing receiving and transmitting or transceiving functionality, the radio circuitry 22 connected or connectable to the control circuitry. An antenna circuitry 24 of the user equipment 10 is connected or connectable to the radio circuitry 22 to collect or send and/or amplify signals. Radio circuitry 22 and the control circuitry 20 controlling it are configured for cellular communication with a network on a first cell /carrier and a second cell /carrier and/or for dual connectivity, in particular utilizing E-UTRAN/LTE resources as described herein. The user equipment 10 may be adapted to carry out any of the methods for operating a terminal disclosed herein; in particular, it may comprise corresponding circuitry, e.g. control circuitry.

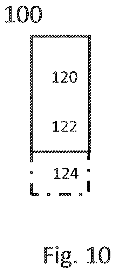

Figure 10 schematically shows a (radio) network node or base station 100, which in particular may be an eNodeB or gNodeB (a base station for NR). Network node 100 comprises control circuitry 120, which may comprise a controller connected to a memory. Any module of a network node, e.g. a receiving module and/or transmitting module and/or control or processing module and/or scheduling module, may be implemented in and/or executable by the network node, in particular the control circuitry 120. The control circuitry 120 is connected to control radio circuitry 122 of the network node 100, which provides receiver and transmitter and/or transceiver functionality. An antenna circuitry 124 may be connected or connectable to radio circuitry 122 for signal reception or transmittance and/or amplification. The network node 100 may be adapted to carry out any of the methods for operating a network node disclosed herein; in particular, it may comprise corresponding circuitry, e.g. control circuitry.

There may be considered a network node adapted for performing any one of the methods for operating a network node described herein.

There may be considered a user equipment adapted for performing any one of the methods for operating a user equipment described herein.

There is also disclosed a program product comprising code executable by control circuitry, the code causing the control circuitry to carry out and/or control any one of the method for operating a user equipment or network node as described herein, in particular if executed on control circuitry, which may be control circuitry of a user equipment or a network node.

Moreover, there is disclosed a carrier (or storage) medium arrangement carrying and/or storing at least any one of the program products described herein and/or code executable by control circuitry, the code causing the control circuitry to perform and/or control at least any one of the methods described herein. A carrier medium arrangement may comprise one or more carrier media. Generally, a carrier medium may be accessible and/or readable and/or receivable by control circuitry. Storing data and/or a program product and/or code may be seen as part of carrying data and/or a program product and/or code. A carrier medium generally may comprise a guiding/transporting medium and/or a storage medium. A guiding/transporting medium may be adapted to carry and/or carry and/or store signals, in particular electromagnetic signals and/or electrical signals and/or magnetic signals and/or optical signals. A carrier medium, in particular a guiding/transporting medium, may be adapted to guide such signals to carry them. A carrier medium, in particular a guiding/transporting medium, may comprise the electromagnetic field, e.g. radio waves or microwaves, and/or optically transmissive material, e.g. glass fiber, and/or cable. A storage medium may comprise at least one of a memory, which may be volatile or non-volatile, a buffer, a cache, an optical disc, magnetic memory, flash memory, etc.

A user equipment or terminal being configured with a cell, e.g. a serving cell, and/or carrier, and/or being connected to a network node via a cell, may be in a state in which it may communicate (transmit and/or receive data, e.g. with the network node) using the cell or carrier, e.g. being registered with the network for communication and/or being synchronized to the cell and/or carrier; in particular, the cell may be activated for the user equipment or terminal and/or the latter may be in an RRC_connected or RRC_idle state regarding the cell or the node providing the cell. A serving cell may be associated with one or more serving carriers. A cell may be defined by the carriers it comprises and/or an area of coverage associated to it. Generally, a UE may be adapted for carrier aggregation and/or be configured for carrier aggregation, e.g. by a network node.

In the context of this description, wireless communication may be communication, in particular transmission and/or reception of data, via electromagnetic waves and/or an air interface, in particular radio waves, e.g. in a wireless communication network and/or utilizing a radio access technology (RAT). The communication may involve one or more than one terminal connected to a wireless communication network and/or more than one node of a wireless communication network and/or in a wireless communication network. It may be envisioned that a node in or for communication, and/or in, of or for a wireless communication network is adapted for communication utilizing one or more RATs, in particular LTE/E-UTRA. A communication may generally involve transmitting and/or receiving messages, in particular in the form of packet data. A message or packet may comprise control and/or configuration data and/or payload data and/or represent and/or comprise a batch of physical layer transmissions. Control and/or configuration data may refer to data pertaining to the process of communication and/or nodes and/or terminals of the communication. It may, e.g., include address data referring to a node or terminal of the communication and/or data pertaining to the transmission mode and/or spectral configuration and/or frequency and/or coding and/or timing and/or bandwidth as data pertaining to the process of communication or transmission, e.g. in a header. Each node or terminal involved in communication may comprise radio circuitry and/or control circuitry and/or antenna circuitry, which may be arranged to utilize and/or implement one or more than one radio access technologies. Radio circuitry of a node or terminal may generally be adapted for the transmission and/or reception of radio waves, and in particular may comprise a corresponding transmitter and/or receiver and/or transceiver, which may be connected or connectable to antenna circuitry and/or control circuitry. Control circuitry of a node or terminal may comprise a controller and/or memory arranged to be accessible for the controller for read and/or write access. The controller may be arranged to control the communication and/or the radio circuitry and/or provide additional services. Circuitry of a node or terminal, in particular control circuitry, e.g. a controller, may be programmed to provide the functionality described herein. A corresponding program code may be stored in an associated memory and/or storage medium and/or be hardwired and/or provided as firmware and/or software and/or in hardware. A controller may generally comprise a processor and/or microprocessor and/or microcontroller and/or FPGA (Field-Programmable Gate Array) device and/or ASIC (Application Specific Integrated Circuit) device. More specifically, it may be considered that control circuitry comprises and/or may be connected or connectable to memory, which may be adapted to be accessible for reading and/or writing by the controller and/or control circuitry. Radio access technology may generally comprise, e.g., Bluetooth and/or Wifi and/or WIMAX and/or cdma2000 and/or GERAN and/or UTRAN and/or in particular E-Utran and/or LTE. A communication may in particular comprise a physical layer (PHY) transmission and/or reception, onto which logical channels and/or logical transmission and/or receptions may be imprinted or layered.

A node of a wireless communication network may be implemented as a terminal and/or user equipment and/or network node and/or base station (e.g. eNodeB or gNodeB) and/or relay node and/or any device generally adapted for communication in a wireless communication network, in particular cellular communication. A node adapted for radio and/or wireless communication may be considered to be a radio node.

A wireless communication network or cellular network may comprise a network node, in particular a radio network node, which may be connected or connectable to a core network, e.g. a core network with an evolved network core, e.g. according to LTE. A network node may e.g. be a base station. The connection between the network node and the core network/network core may be at least partly based on a cable/landline connection. Operation and/or communication and/or exchange of signals involving part of the core network, in particular layers above a base station or eNB, and/or via a predefined cell structure provided by a base station or eNB, may be considered to be of cellular nature or be called cellular operation.

A terminal may be implemented as a user equipment; it may generally be considered that a terminal is adapted to provide and/or define an end point of a wireless communication and/or for a wireless communication network. A terminal or a user equipment (UE) may generally be a device configured for wireless device-to-device communication and/or a terminal for a wireless and/or cellular network, in particular a mobile terminal, for example a mobile phone, smart phone, tablet, PDA, etc. A user equipment or terminal may be a node of or for a wireless communication network as described herein, e.g. if it takes over some control and/or relay functionality for another terminal or node. It may be envisioned that terminal or user equipment is adapted for one or more RATs, in particular LTE/E-UTRA. It may be considered that a terminal or user equipment comprises radio circuitry and/control circuitry for wireless communication. Radio circuitry may comprise for example a receiver device and/or transmitter device and/or transceiver device. Control circuitry may include a controller, which may comprise a microprocessor and/or microcontroller and/or FPGA (Field-Programmable Gate Array) device and/or ASIC (Application Specific Integrated Circuit) device. It may be considered that control circuitry comprises or may be connected or connectable to memory, which may be adapted to be accessible for reading and/or writing by the controller and/or control circuitry. It may be considered that a terminal or user equipment is configured to be a terminal or user equipment adapted for LTE/E-UTRAN. Generally, a terminal may be adapted to support dual connectivity. It may comprise two independently operable transmitter (or transceiver) circuitries and/or two independently operable receiver circuitries; for dual connectivity, it may be adapted to utilize one transmitter (and/or receiver or transceiver, if provided) for communication with a master network node and one transmitter (and/or receiver or transceiver, if provided) for communication with a secondary network node. It may be considered that a terminal comprises more than two such independently operable circuitries.

A network node or base station, e.g. an eNodeB or gNodeB, may be any kind of base station of a wireless and/or cellular network adapted to serve one or more terminals or user equipments. It may be considered that a base station is a node or network node of a wireless communication network. A network node or base station may be adapted to provide and/or define and/or to serve one or more cells of the network and/or to allocate frequency and/or time resources for communication to one or more nodes or terminals of a network. Generally, any node adapted to provide such functionality may be considered a base station. It may be considered that a base station or more generally a network node, in particular a radio network node, comprises radio circuitry and/or control circuitry for wireless communication. It may be envisioned that a base station or network node is adapted for one or more RATs, in particular LTE/E-UTRA. Radio circuitry may comprise for example a receiver device and/or transmitter device and/or transceiver device. Control circuitry may include a controller, which may comprise a microprocessor and/or microcontroller and/or FPGA (Field-Programmable Gate Array) device and/or ASIC (Application Specific Integrated Circuit) device. It may be considered that control circuitry comprises or may be connected or connectable to memory, which may be adapted to be accessible for reading and/or writing by the controller and/or control circuitry. A base station may be arranged to be a node of a wireless communication network, in particular configured for and/or to enable and/or to facilitate and/or to participate in cellular communication, e.g. as a device directly involved or as an auxiliary and/or coordinating node. Generally, a base station may be arranged to communicate with a core network and/or to provide services and/or control to one or more user equipments and/or to relay and/or transport communications and/or data between one or more user equipments and a core network and/or another base station. A network node or base station may generally be adapted to allocate and/or schedule time/frequency resources of a network and/or one or more cells serviced by the base station. An eNodeB (eNB) may be envisioned as an example of a base station, e.g. according to an LTE standard. It may be considered that a base station is configured as or connected or connectable to an Evolved Packet Core (EPC) and/or to provide and/or connect to corresponding functionality. The functionality and/or multiple different functions of a base station may be distributed over one or more different devices and/or physical locations and/or nodes. A base station may be considered to be a node of a wireless communication network. Generally, a base station may be considered to be configured to be a controlling node and/or coordinating node and/or to allocate resources in particular for cellular communication via one or more than one cell.

It may be considered for cellular communication there is provided at least one uplink (UL) connection and/or channel and/or carrier and at least one downlink (DL) connection and/or channel and/or carrier, e.g. via and/or defining a cell, which may be provided by a network node, in particular a base station or eNodeB or gNodeB. An uplink direction may refer to a data transfer direction from a terminal to a network node, e.g. base station and/or relay station. A downlink direction may refer to a data transfer direction from a network node, e.g. base station and/or relay node, to a terminal. UL and DL may be associated to different frequency resources, e.g. carriers and/or spectral bands. A cell may comprise and/or be defined by at least one uplink carrier and at least one downlink carrier, which may have different frequency and/or frequency bands, or may have the same frequency or frequency band (e.g. for half-duplex; for full-duplex, a cell may comprise one carrier serving both as UL and DL carrier, thus defining a cell).

A network node (which may be a radio network node), e.g. a base station or eNodeB or gNodeB, may be adapted to provide and/or define and/or control one or more cells, e.g. a group of cells, which may be carrier aggregated (CA) cells. The group of cells may comprise at least one primary cell, which may be considered to be a member of the group and/or to be associated to the group. The cell group may comprise one or more secondary cells (it should be noted that every group may comprise secondary cells, not only a secondary group; the secondary in this context refers to being secondary to the primary cell of a group). A primary cell may be adapted and/or utilised for providing control information (in particular allocation data, and/or scheduling and/or allocation information regarding the primary cell and/or the group of cells to and/or from a terminal connected for communication (transmission and reception) and/or configured with the cell. The control information may pertain to the primary cell and/or the group of cells. Each primary cell and/or the associated group may be associated to a specific network node. A master network node may be adapted to provide and/or service and/or define a primary cell in a master cell group. A secondary network node may be adapted to provide and/or service and/or define a secondary cell group. MU-MIMO transmission may refer to one cell, in particular a primary cell.

Generally, a network node may be a network node of and/or for a wireless or cellular communication network. A UE may be a UE of and/or for a wireless or cellular communication network.

A network node, in particular a base station, and/or a terminal, in particular a UE, may be adapted for communication in spectral bands (frequency bands) licensed and/or defined for LTE.

Resources or communication resources may generally be frequency and/or time resources, which may comprise e.g. frames, subframes, slots, resource blocks, carriers, subcarriers, channels, frequency/spectral bands, etc. Allocated or scheduled resources may comprise and/or refer to frequency-related information, in particular regarding one or more carriers and/or bandwidth and/or subcarriers and/or time-related information, in particular regarding frames and/or slots and/or subframes, and/or regarding resource blocks and/or time/frequency hopping information. Transmitting on allocated resources and/or utilizing allocated resources may comprise transmitting data on the resources allocated, e.g. on the frequency and/or subcarrier and/or carrier and/or timeslots or subframes indicated. It may generally be considered that allocated resources may be released and/or de-allocated. A network or a node of a network, e.g. a network node or allocation node, e.g. a base station, may be adapted to determine and/or transmit corresponding allocation or scheduling data, e.g. data indicating release or de-allocation of resources and/or scheduling of UL and/or DL resources. Accordingly, resource allocation may be performed by the network and/or by a network node; a network node adapted for providing resource allocation/scheduling for one or more than one terminals may be considered to be a controlling node. Resources may be allocated and/or scheduled on a cell level and/or by a network node servicing and/or providing the cell.

Allocation data may be considered to be data indicating and/or granting resources allocated by a network node, e.g. a controlling and/or allocation node, in particular data identifying or indicating which resources are reserved or allocated, e.g. for cellular communication, which may generally comprise transmitting and/or receiving data and/or signals; the allocation data may indicate a resource grant or release and/or resource scheduling. A grant or resource grant may be considered to be one example of allocation data. It may be considered that an allocation node is adapted to transmit allocation data directly to a node and/or indirectly, e.g. via a relay node and/or another node or base station.

Allocation data may comprise control data and/or be part of or form a message, in particular according to a pre-defined format, for example a DCI format, which may be defined in a standard, e.g. LTE or NR. In particular, allocation data may comprise information and/or instructions to reserve resources or to release resources, which may already be allocated. A UE may generally be adapted to perform transmission of data to, e.g. UL data, and/or reception of data from, a network node and/or to more than one network nodes, according to allocation data. Generally, allocation data may indicate and/or instruct transmission mode and/or configuration, in particular regarding a power level of transmission. A UE may generally be adapted for configuring itself according to allocation data, in particular to set a corresponding power level and/or timing of UL and DL operations. Generally, allocation data may represent a configuration, which may instruct and/or configure a UE for a specific behaviour or to use specific functionality or a parameter setting according to the configuration.

Configuring a terminal or UE, e.g. by a network or network node, may comprise transmitting, by the network or network node, one or more parameters and/or commands and/or allocation data or control data and/or a corresponding configuration to the terminal or UE, and/or the terminal or UE changing its configuration and/or setup, e.g. based on received parameters and/or commands and/or allocation data and/or the corresponding configuration from the network and/or the network node.

Alternatively, or additionally to any of the individual features and/or any combination of the features described herein, the following variants may be considered.

For example, there may be considered a method for operating a user equipment or terminal for a wireless communication network. The method may comprise operating based on a configuration.

There may also be considered a user equipment or terminal for a wireless communication network. The user equipment or terminal may be adapted for, and/or comprise an operating module for, operating based on a configuration.

Operating may comprise receiving signals, in particular single layer signals. It may be considered that operating comprises performing measurements based on the configuration and/or on received signals, which may be single layer signals. Performing measurements may comprise performing measurements on a group of reference signals based on the configuration. Performing measurements may be performed by a measuring module of the UE or terminal, which may be part of and/or separate from and/or a specific implementation of an operating module.

In particular, the configuration indicates a combination length of symbols for the measurements, e.g. an OCC value.

Performing measurements may comprise measuring (and/or combining the measurements) on a number of symbols, which may be neighboring (in time and/or frequency) symbols indicated by the combination length. Such performing measurements and/or combining may in particular include and/or be based on the assumption that the channel conditions and/or measurements are stable and/or consistent over the time covered by the combination.

It may be considered that performing measurements is based on transmission and/or signals representing one codeword, in particular represented by a table, e.g. the table referred to herein.

The configuration may indicate and/or configure an antenna port, e.g. according to one of the tables indicating an antenna port provided herein. Performing measurement may be based on the antenna port indicated and/or configured.

Operating and/or performing measurements may be based on a transmission assumption and/or transmission indication, e.g. regarding transmission to other UEs.

The signals or signaling may be associated to one channel, in particular a physical channel, and/or cell and/or intended or addressed to a specific UE or terminal. Signaling may comprise reference signaling, in particular CRS and/or DMRS. Reference signaling may comprise one or more (e.g., neighboring in time and/or frequency) symbols or signals. Signaling, in particular, reference signaling, may comprise different components, which may be associated to different ports (e.g., antenna ports) and/or channels. Different components may be configured with, and/or have associated to them, different combination lengths. Performing measurements may comprise performing measurements on different components, in particular measuring on different components on different numbers of symbols, which may be indicated by the respective combination lengths associated to, and/or configured for, the different components. Such combination lengths may be configured by, and/or provided by, a configuration. A configuration may indicate different combination lengths for different components and/or ports. The different components may be transmitted (and/or received) simultaneously, e.g. in the same subframe or slot or mini-slot or Transmission Time Interval (TTI) or short TTI or symbol time interval, and/or similar time interval defined in an associated standard, which may in particular be a time interval defined to cover a number of symbol time intervals, in particular 20 or less symbol time intervals.

There may also be considered a method for operating a network node for a wireless communication network. The method may comprise configuring one or more UEs or terminal with a configuration as disclosed herein. Alternatively or additionally, the method may comprise transmitting (e.g., of signals and/or data and/or on a physical and/or downlink channel like PDSCH or a dedicated channel) to one or more UEs or terminals.

There may also be considered a network node for a wireless communication network. The network node may be adapted for, and/or comprise a configuring module for, configuring one or more UEs or terminal with a configuration as disclosed herein, in particular with a port indication and/or a transmission assumption or transmission indication. Alternatively or additionally, the network node may be adapted for, and/or comprise a transmitting module for, transmitting (e.g., of signals and/or data and/or on a physical and/or downlink channel like PDSCH or a dedicated channel) to one or more UEs or terminals.

The network node may be connected or connectable to an antenna array as described herein.

Transmitting, e.g. by a network node, may comprise utilizing beamforming and/or be MU-MIMO transmission. In particular, transmitting may comprise transmitting in a single layer to a plurality of UEs or terminals. It may be considered that transmitting comprises transmitting assuming and/or based on and/or utilizing different combination lengths for different layers and/or UEs or terminal. The combination lengths may be configured to the UEs or terminals. It may be considered that the combination lengths are determined, e.g. by the network node and/or a determining module, based on operational conditions, e.g. operational conditions of the UEs or terminals, in particular speed of the UE/s or terminal/s, and/or channel quality change rate.

For example, a combination length for a UE or terminal with high speed and/or high rate of change (e.g., as compared to one or more thresholds and/or speed or change rate classes, which may be predetermined or pre-defined, e.g. according to a standard) may be determined to be smaller than a combination length of one or more UEs or terminals with low speed and/or low rate of change (e.g., as compared to one or more thresholds and/or speed or change rate classes, which may be predetermined or pre-defined, e.g. according to a standard). Alternatively or additionally, high or low speed or rate of change may be determined based on a comparison of corresponding operational conditions of the UEs or terminals transmitted to. Transmitting may be performed such that the signals transmitted to the different UEs or terminals and/or the corresponding ports, are orthogonal to each other. It may be considered that transmitting comprises utilizing the same and/or overlapping resources for at least two, or for the, UEs or terminals, in particular at least partially overlapping in time and/or frequency.

Operational conditions of a terminal or UE may be determined based on signals received from the UE or terminal, e.g. measurement reports and/or condition indications, and/or based on historical data and/or measurements performed by the network node and/or information received from one or more other network nodes, e.g. other eNodeBs or node/s or higher level nodes, e.g. during and/or pertaining to handover. Operation conditions may in particular pertain to the speed of a UE and/or the rate of channel change, e.g., the change in channel and/or transmission quality. Such change may e.g. be represented by a slope.

Measuring and/or performing measurements (and/or determining channel estimate), in particular as performed by a UE or terminal, may pertain to received signal power and/or SINR and/or SIR and/or SNR and/or pertain to channel quality information or indication and/or channel state information or indication, in particular to CSI/CQI as defined by a standard like LTE.

A transmission assumption (and/or transmission indication) may generally be associated to the configuration and/or configured with the configuration and/or indicated therein, directly or indirectly. It may be considered that the transmission assumption and/or transmission indication pertains to, and/or is based on, a configured port, which may be a port configured and/or used for MU MIMO transmissions (particularly, by the network node). The transmission assumption and/or transmission indication may comprise not assuming that another antenna port (used for MU MIMO transmissions, in particular by a, and/or the same, network node, and/or a related TP, e.g. of the same cell) is not associated with transmission to another UE. The transmission using the configured antenna port and/or another antenna port may pertain to one or more specific (physical and/or downlink) channel/s, e.g. PDSCH.

A configuration may comprise and/or be a representation of allocation data. A configuration may be configured by a network, in particular a network node, e.g. an allocation node and/or eNodeB. A configuration may in particular configure and/or comprise a parameter indicating reference signaling to be used and/or an associated combination length and/or port. In particular, a configuration may pertain to a dmrs-tableAlt, e.g. one or more values referring to a corresponding table. The table may be pre-defined, e.g. according to a standard and/or as suggested herein.

An allocation node may be a network node adapted for (e.g., wirelessly and/or using wireless signaling) configuring a user equipment (UE) or terminal, e.g. with a configuration and/or by transmitting allocation data associated to the configuration to the UE or terminal. An eNB may be considered an allocation node.

Performing measurements (also referred to a measuring) may generally be performed on reference signaling/signals (respectively, one or more reference symbols of such signaling) and/or for, and/or pertaining to, one subframe. Measuring on more than one symbol may comprise providing a channel estimate for a combination of the symbols and/or a (e.g., a single or one or common) measurement report pertaining to the combination of the symbols. In particular, a measurement report may represent measurements on a combination of symbols indicate by a combination length.

Transmitting a signal, e.g. in a beam pattern and/or using a MIMO antenna array or MIMO technology, may comprise beamforming. Beamforming may be based on a precoder. A precoder may represent a beamforming configuration, in particular a mapping for a signal to a plurality of antenna elements, in particular for beamforming and/or MIMO operation. It may be considered that a precoder is represented by a matrix. A precoder may be associated to a codebook. A codebook may comprise a plurality of precoders associated to allowed beamforming configurations, e.g. based on a standard like LTE and/or operating conditions, based on which a standard-defined codebook for example may be limited.

A port, also referred to as antenna port, may represent at least one signal and a mapping of the at least one signal to a plurality of antenna elements, and may generally be associated to a precoder (corresponding to the mapping). The at least one signal may comprise a reference signal, in particular a reference signal pertaining to channel state information, e.g. a CSI-RS (Channel State Information-Reference Signal). Reference signals may generally be cell-specific or terminal/UE - specific. Examples of reference signals comprise CRS (which may be cell-specific) and DMRS (which may be considered UE-specific). To each port there may be associated one or more types of reference signals, and/or data signal and/or data transmission, e.g. on a specific physical channel, e.g. PDSCH.

An antenna element may be a physical antenna element or a virtual antenna element. A virtual antenna element may comprise one or more physical antenna elements, and provide a logical representation of the physical antenna element/s as one virtual antenna element. An antenna element, in particular a physical antenna element, may be controllable separately from other (physical antenna elements), in particular for transmission. It may be considered that separately controllable antenna elements may be operated with different transmission parameters, e.g. in terms of transmission power and/or phase of a transmission and/or transmission frequency (of transmitted radiation) and/or polarization. An antenna element may be associated to an antenna port, via which a signal to be transmitted via the antenna element may be provided to the antenna element, to be passed to the physical antenna element/s of the antenna element. It may be considered that a physical antenna element has associated to it and/or comprises a power amplifier, which may be separately operable from power amplifiers associated to other power amplifiers of other physical antenna elements. It may be considered that a polarization is associated to an antenna element, e.g. due to form and/or arrangement of a physical antenna element. The polarization of a virtual antenna element may be defined by the individual polarizations of its physical antenna elements. The polarization of a group of antenna elements may be based on the individual polarizations of its antenna elements.

An antenna array may comprise multiple antenna elements, which may be separately controllable. Antenna elements of an array, in particular elements used for beamforming, may be arranged in a two-dimensional arrangement (array).

A layer (of MIMO signaling or transmission) may correspond to a beam formed by beamforming, and/or may correspond to an independent data stream. Multiple layers may represent multiple independent data streams.

Dynamically signaling information to a UE or terminal may generally refer to configuring the UE or terminal with the corresponding information, e.g. by transmitting corresponding allocation data indicating the, and/or indicative of the, information dynamically signalled. Dynamic signaling may be performed for each subframe and/or on a frame basis (covering 10 subframes) and/or may pertain to individual subframes (or a small number of subframes of 10 or less or 20 or less).

A code word may be considered to represent user data before it is formatted for transmission, e.g. using modulation and/or encoding and/or a precoder.

Generally, control circuitry may also be referred to and/or be implemented as processing circuitry. Radio circuitry may comprise a transmitter and/or receiver and/or transceiver, and/or associated circuitry.

Some useful abbreviations comprise:

| Abbreviation | Explanation |
| --- | --- |
| CRS | Cell-specific Reference Signal |
| CQI | Channel Quality Indication |
| CSI | Channel State Information |
| CSI-RS | Channel State Information Reference Signal |
| DCI | Downlink Control Information |
| DMRS | Demodulation Reference Signal |
| eNB | enhanced Node B, eNodeB |
| EPRE | Energy Per Resource Element |
| ID | Identity |
| IE | Information Element |
| MIMO | Multiple Input Multiple Output |
| MU-MIMO | Multi-User MIMO |
| PDCCH | Physical Downlink Control Channel |
| PDSCH | Physical Downlink Shared Channel |
| PMI | Precoding Matrix Indication |
| RB | Resource Block |
| RE | Resource Element |
| RRC | Radio Resource Control |
| Rx | Receive |
| SINR | Signal to Interference and Noise Ratio |
| SIR | Signal to Interference Ratio |

| SNR | Signal to Noise Ratio |
| SU-MIMO | Single User MIMO |
| TM | PDSCH Transmission Mode |
| Tx | Transmit |
| TxD | Transmit Diversity |
| UE | User Equipment |

UL Uplink; generally referring to transmission of data to a node/into a direction closer to a network core (physically and/or logically); in particular from a D2D enabled node or UE to a base station or eNodeB; in the context of D2D, it may refer to the spectrum/bandwidth utilized for transmitting in D2D, which may be the same used for UL communication to a eNB in cellular communication; in some D2D variants, transmission by all devices involved in D2D communication may in some variants generally be in UL spectrum/bandwidth/carrier/frequency

DL Downlink; generally referring to transmission of data to a node/into a direction further away from network core (physically and/or logically); in particular from a base station or eNodeB to a D2D enabled node or UE; often uses specified spectrum/bandwidth different from UL (e.g. LTE)

These and other abbreviations may be used according to LTE standard definitions or generally according to a 3GPP standard.

In this description, for purposes of explanation and not limitation, specific details are set forth (such as particular network functions, processes and signaling steps) to provide a thorough understanding of the technique presented herein. It will be apparent to one skilled in the art that the present concepts and aspects may be practiced in other embodiments and variants that depart from these specific details.

For example, the concepts and variants are partially described in the context of Long Term Evolution (LTE) or LTE-Advanced (LTE-A) mobile or wireless communications technologies; however, this does not rule out the use of the present concepts and aspects in connection with additional or alternative mobile communication technologies such as the Global System for Mobile Communications (GSM). While the following embodiments will partially be described with respect to certain Technical Specifications (TSs) of the Third Generation Partnership Project (3GPP), it will be appreciated that the present concepts and aspects could also be realized in connection with different Performance Management (PM) specifications.

Moreover, those skilled in the art will appreciate that the services, functions and steps explained herein may be implemented using software functioning in conjunction with a programmed microprocessor, or using an Application Specific Integrated Circuit (ASIC), a Digital Signal Processor (DSP), a Field Programmable Gate Array (FPGA) or general purpose computer. It will also be appreciated that while the embodiments described herein are elucidated in the context of methods and devices, the concepts and aspects presented herein may also be embodied in a program product as well as in a system comprising control circuitry, e.g. a computer processor and a memory coupled to the processor, wherein the memory is encoded with one or more programs or program products that execute the services, functions and steps disclosed herein.

It is believed that the advantages of the aspects and variants presented herein will be fully understood from the foregoing description, and it will be apparent that various changes may be made in the form, constructions and arrangement of the exemplary aspects thereof without departing from the scope of the concepts and aspects described herein or without sacrificing all of its advantageous effects. Because the aspects presented herein can be varied in many ways, it will be recognized that any scope of protection should be defined by the scope of the claims that follow without being limited by the description.

Cited documents:

3GPP TS 36.211 V13.0.0 3rd Generation Partnership Project;Technical Specification Group Radio Access Network; Evolved Universal Terrestrial Radio Access (E-UTRA); Physical channels and modulation(Release 13)
3GPP TS 36.212 V13.0.0 3rd Generation Partnership Project;Technical Specification Group Radio Access Network; Evolved Universal Terrestrial Radio Access (E-UTRA); Multiplexing and channel coding (Release 13)
3GPP TS 36.213 V13.0.1 3rd Generation Partnership Project;Technical Specification Group Radio Access Network;Evolved Universal Terrestrial Radio Access (E-UTRA); Physical layer procedures(Release 13)

**Claims**

1. Method for operating a user equipment (10) for a wireless communication network, the method comprising:

   performing, based on a configuration, measurements for estimating a channel, on received signaling, wherein the configuration indicates a combination length of symbols which indicates the maximum number of reference symbols combinable for performing the measurements,
and wherein performing measurements comprises measuring on a number of symbols indicated by the combination length and wherein said combination length comprises an orthogonal cover code, OCC, value of a demodulation reference signal, DMRS.

2. The method according to claim 1, wherein said OCC value of said DMRS is used for at least one antenna port associated with a single layer PDSCH transmission.

3. User equipment (10) for a wireless communication network, the user equipment being adapted for:

performing, based on a configuration, measurements for estimating a channel, on received signaling, wherein the configuration indicates a combination length of symbols which indicates the maximum number of reference symbols combinable for performing the measurements,
and wherein performing measurements comprises measuring on a number of symbols indicated by the combination length and wherein said combination length comprises an orthogonal cover code, OCC, value of a demodulation reference signal, DMRS.

4. Method for operating a network node (100) for signaling when transmitting to a plurality of UEs, the method comprising:

configuring one or more user equipments (10) with a configuration for measurements for estimating a channel, wherein the configuration indicates a combination length of symbols which indicates the maximum number of reference symbols combinable for performing the measurements,
wherein performing measurements comprises measuring on a number of symbols indicated by the combination length and wherein said combination length comprises an orthogonal cover code, OCC, value of a demodulation reference signal, DMRS

5. Network node (100) for a wireless communication network, the network node (100) being adapted for:

configuring one or more user equipments (10) with a configuration for measurements for estimating a channel, wherein the configuration indicates a combination length of symbols which indicates the maximum number of reference symbols combinable for performing the measurements,
wherein performing measurements comprises measuring on a number of symbols indicated by the combination length and wherein said combination length comprises an orthogonal cover code, OCC, value of a demodulation reference signal, DMRS.

6. A computer program product comprising instructions which, when the program is executed by a computer, cause the computer to carry out a method according to claim 1 or 4.

7. A computer-readable data carrier having stored thereon the computer program product of claim 6.

**Patentansprüche**

1. Verfahren zum Betreiben einer Benutzereinrichtung (10) für ein drahtloses Kommunikationsnetz, wobei das Verfahren umfasst:
Durchführen, basierend auf einer Konfiguration, von Messungen zum Schätzen eines Kanals, an empfangener Signalisierung, wobei die Konfiguration eine Kombinationslänge von Symbolen angibt, die die maximale Anzahl an Referenzsymbolen angibt, die zum Durchführen der Messungen kombinierbar sind, und wobei das Durchführen von Messungen das Messen einer Anzahl von Symbolen umfasst, die durch die Kombinationslänge angegeben werden, und wobei die Kombinationslänge einen orthogonalen Abdeckcode-Wert, OCC-Wert, eines Demodulationsreferenzsignals, OCC, umfasst.

2. Verfahren nach Anspruch 1, wobei der OCC-Wert des DMRS für mindestens einen Antennenanschluss verwendet wird, der einer PDSCH-Übertragung einer einzelnen Schicht zugeordnet ist.

3. Benutzereinrichtung (10) für ein drahtloses Kommunikationsnetz, wobei die Benutzereinrichtung ausgelegt ist zum:
Durchführen, basierend auf einer Konfiguration, von Messungen zum Schätzen eines Kanals, an empfangener Signalisierung, wobei die Konfiguration eine Kombinationslänge von Symbolen angibt, die die maximale Anzahl von Referenzsymbolen angibt, die zum Durchführen der Messungen kombinierbar sind, und wobei das Durchführen von Messungen das Messen einer Anzahl von Symbolen umfasst, die durch die Kombinationslänge angegeben werden, und wobei die Kombinationslänge einen orthogonalen Abdeckcode-Wert, OCC-Wert, eines Demodulationsreferenzsignals, DMRS, umfasst.

**4.** Verfahren zum Betreiben eines Netzknotens (100) zum Signalisieren beim Übertragen an eine Vielzahl von UEs, wobei das Verfahren umfasst:
Konfigurieren einer oder mehrerer Benutzereinrichtungen (10) mit einer Konfiguration für Messungen zum Schätzen eines Kanals, wobei die Konfiguration eine Kombinationslänge von Symbolen angibt, die die maximale Anzahl von Referenzsymbolen angibt, die zum Durchführen der Messungen kombinierbar sind, wobei das Durchführen von Messungen das Messen einer Anzahl von Symbolen umfasst, die durch die Kombinationslänge angegeben werden, und wobei die Kombinationslänge einen orthogonalen Abdeckcode-Wert, OCC-Wert, eines Demodulationsreferenzsignals, DMRS, umfasst.

**5.** Netzknoten (100) für ein drahtloses Kommunikationsnetz, wobei der Netzknoten (100) angepasst ist für:
Konfigurieren einer oder mehrerer Benutzereinrichtungen (10) mit einer Konfiguration für Messungen zum Schätzen eines Kanals, wobei die Konfiguration eine Kombinationslänge von Symbolen angibt, die die maximale Anzahl von Referenzsymbolen angibt, die zum Durchführen der Messungen kombinierbar sind, wobei das Durchführen von Messungen das Messen einer Anzahl von Symbolen umfasst, die durch die Kombinationslänge angegeben sind, und wobei die Kombinationslänge einen orthogonalen Abdeckcode-Wert, OCC-Wert, eines Demodulationsreferenzsignals, DMRS, umfasst.

**6.** Computerprogrammprodukt, umfassend Anweisungen, die, wenn das Programm durch einen Computer ausgeführt wird, den Computer veranlassen, das Verfahren nach einem der Ansprüche 1 bis 4 auszuführen.

**7.** Computerlesbarer Datenträger, auf dem das Computerprogrammprodukt nach Anspruch 6 gespeichert ist.

**Revendications**

**1.** Procédé pour faire fonctionner un équipement utilisateur (10) pour un réseau de communication sans fil, le procédé comprenant :
la mise en œuvre, sur la base d'une configuration, de mesures pour estimer un canal, sur une signalisation reçue, dans lequel la configuration indique une longueur de combinaison de symboles qui indique le nombre maximal de symboles de référence combinables pour mettre en œuvre les mesures, et dans lequel la mise en œuvre de mesures comprend la mesure sur un nombre de symboles indiqué par la longueur de combinaison et dans lequel ladite longueur de combinaison comprend une valeur de code de couverture orthogonal, OCC, d'un signal de référence de démodulation, DMRS.

**2.** Procédé selon la revendication 1, dans lequel ladite valeur OCC dudit DMRS est utilisée pour au moins un port d'antenne associé à une transmission PDSCH à couche unique.

**3.** Équipement utilisateur (10) pour un réseau de communication sans fil, l'équipement utilisateur étant conçu pour :
la mise en œuvre, sur la base d'une configuration, de mesures pour estimer un canal, sur une signalisation reçue, dans lequel la configuration indique une longueur de combinaison de symboles qui indique le nombre maximal de symboles de référence combinables pour mettre en œuvre les mesures, et dans lequel la mise en œuvre de mesures comprend la mesure sur un nombre de symboles indiqué par la longueur de combinaison et dans lequel ladite longueur de combinaison comprend une valeur de code de couverture orthogonal, OCC, d'un signal de référence de démodulation, DMRS.

**4.** Procédé pour faire fonctionner un nœud de réseau (100) pour signalisation lors de la transmission à une pluralité d'UE, le procédé comprenant :
la configuration d'un ou plusieurs équipements utilisateur (10) avec une configuration pour des mesures pour estimer un canal, sur une signalisation reçue, dans lequel la configuration indique une longueur de combinaison de symboles qui indique le nombre maximal de symboles de référence combinables pour mettre en œuvre les mesures, et dans lequel la mise en œuvre de mesures comprend la mesure sur un nombre de symboles indiqué par la longueur de combinaison et dans lequel ladite longueur de combinaison comprend une valeur de code de couverture orthogonal, OCC, d'un signal de référence de démodulation, DMRS

**5.** Nœud de réseau (100) pour un réseau de communication sans fil, le nœud de réseau (100) étant conçu pour :
la configuration d'un ou plusieurs équipements utilisateur (10) avec une configuration pour des mesures pour estimer un canal, sur une signalisation reçue, dans lequel la configuration indique une longueur de combinaison de symboles qui indique le nombre maximal de symboles de référence combinables pour mettre en œuvre les mesures, et dans lequel la mise en œuvre de mesures comprend la mesure sur un nombre de symboles indiqué par la longueur de combinaison et dans lequel ladite longueur de combinaison comprend une valeur de code de couverture orthogonal, OCC, d'un signal de référence de démodulation, DMRS.

**6.** Produit programme informatique comprenant des instructions qui, lorsque le programme est exécuté par un ordinateur, amènent l'ordinateur à effectuer un procédé selon la revendication 1 ou 4.

**7.** Support de données lisible par ordinateur sur lequel est stocké le produit programme informatique selon la revendication 6.

Fig. 1

Sub-frame (Tsubframe=1ms)

#0   #1  · · ·                                                                    #9

Radio frame (Tframe=10ms)

Fig. 2

One subframe

Control region

Control signaling

Reference symbols

Fig. 3

frequency

OFDM symbols

Subcarriers

Fig. 4

Fig. 5

Received signal at a UE

| | | | | x(0) | x(1) | | | | | | | x(2) | x(3) |

OFDM Symbol index: 0  1  2  3  4  5  6  0  1  2  3  4  5  6

one subframe

Fig. 6

Fig. 7

Fig. 8

Fig. 9

100

120

122

124

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015215017 A1
- US 2012281551 A1

- WO 2015190847 A1

**Non-patent literature cited in the description**

- CMCC: Spec impact of additional DMRS ports. *3GPP draft; R1-154304, 3rd generation partnership project (3GPP), mobile competence centre; 650, route des lucioles; F-06921 sophia-antipolis cedex france,* 23 August 2015, vol. RAN WG1